# EUROPEAN PATENT APPLICATION

(11) **EP 4 318 033 A1**
(43) Date of publication of application: **07.02.2024**
(21) Application number: 23157949.1
(22) Date of filing: 22.02.2023
(51) Int. Cl.: G01S 7/4863, G01S 17/89, G01S 17/10, G01S 7/481, G01S 7/4865

(54) **SIGNAL PROCESSING DEVICE, LIGHT DETECTOR, AND DISTANCE MEASURING DEVICE**

(30) Priority: 05.08.2022 JP 2022125591
(71) Applicant: KABUSHIKI KAISHA TOSHIBA, Minato-ku Tokyo 105-0023 (JP)
(72) Inventor: KUBOTA, Hiroshi, Minato-ku, Tokyo, 105-0023 (JP); MATSUMOTO, Nobu, Minato-ku, Tokyo, 105-0023 (JP); KIMURA, Katsuyuki, Minato-ku, Tokyo, 105-0023 (JP)
(74) Representative: Hoffmann Eitle

(57) **Abstract**

A signal processing device according to an arrangement includes input ends, first to Nth output ends, and a control circuit. The input ends respectively input signals. The first to Nth output ends are respectively associated with first to Nth groups (N is an integer of not less than two). Each of the first to Nth groups includes M (M is an integer of not less than two) consecutive input ends. The control circuit output, to the kth output end, a signal based on a signal obtained by adding signals respectively input to the M consecutive input ends of the kth group (k an integer of not less than 1 and not more than N). The control circuit switches combinations of input ends as the M input ends to set different combinations at the first setting to the Mth setting.

## Description

### FIELD

Arrangements described herein relate generally to a signal processing device, a light detector, and a distance measuring device.

### BACKGROUND

A distance measuring device called "LiDAR (Light Detection and Ranging)" is known. A LiDAR irradiates a target object with laser light and detects the intensity of reflected light reflected from the target object by a sensor (light detector). Then, the LiDAR measures the distance from itself to the target object based on a light intensity signal output from the sensor.

### BRIEF DESCRIPTION OF THE DRAWINGS

FIG. 1 depicts a schematic diagram showing an example of an overall configuration of a distance measuring device according to a first arrangement.
FIG. 2 depicts a schematic diagram that outlines a ranging method of the distance measuring device according to the first arrangement.
FIG. 3 depicts a schematic diagram showing a more detailed example of a configuration of the distance measuring device according to the first arrangement.
FIG. 4 depicts a schematic diagram showing an example of a ranging result of one frame obtained by the distance measuring device according to the first arrangement.
FIG. 5 depicts a block diagram showing an example of a configuration of a light detector included in the distance measuring device according to the first arrangement.
FIG. 6 depicts a circuit diagram showing an example of circuit configurations of a sensor array and a column selector included in the light detector included in the distance measuring device according to the first arrangement.
FIG. 7 depicts a plan view showing an example of the sensor array and the column selector included in the light detector included in the distance measuring device according to the first arrangement.
FIG. 8 depicts a circuit diagram showing an example of a circuit configuration of a signal processing device included in the light detector included in the distance measuring device according to the first arrangement.
FIG. 9 depicts a circuit diagram showing an example of a circuit configuration of a switch in the distance measuring device according to the first arrangement.
FIG. 10 depicts a block diagram showing an example of a configuration of a measurement section included in the distance measuring device according to the first arrangement.
FIG. 11 depicts a plan view showing an example of a control method for the column selector in a ranging operation of the distance measuring device according to the first arrangement.
FIG. 12 depicts a schematic diagram showing an example of an operation of the signal processing device at the first time in a ranging operation of the distance measuring device according to the first arrangement.
FIG. 13 depicts a schematic diagram showing an example of an operation of the signal processing device at the second time in the ranging operation of the distance measuring device according to the first arrangement.
FIG. 14 depicts a schematic diagram showing an example of a ranging result output method in the ranging operation of the distance measuring device according to the first arrangement.
FIG. 15 depicts a schematic diagram showing an example of the corresponding relationship between a pixel and a measurement result of the ranging operation of the distance measuring device according to the first arrangement.
FIG. 16 depicts a schematic diagram showing an example of setting an averaging range in an averaging process by the distance measuring device according to the first arrangement.
FIG. 17 depicts a schematic diagram for explaining differences in averaging process between the first arrangement and a conventional example.
FIG. 18 depicts a schematic diagram showing an evaluation condition in a light detector according to a first comparative example.
FIG. 19 depicts a schematic diagram showing an evaluation condition in a light detector according to a second comparative example.
FIG. 20 depicts a schematic diagram showing an evaluation condition in a light detector according to the first arrangement.
FIG. 21 depicts a graph showing an example of ranging performances according to the first comparative example and the first arrangement.
FIG. 22 depicts a graph showing evaluation results according to the first comparative example, the second comparative example, and the first arrangement.
FIG. 23 depicts a schematic diagram showing an evaluation condition in the first comparative example for comparison between the first comparative example and the first arrangement.
FIG. 24 depicts a schematic diagram showing an evaluation condition in the second comparative example for comparison between the second comparative example and the first arrangement.
FIG. 25 depicts a block diagram showing an example of a configuration of a light detector included in a distance measuring device according to a second arrangement.
FIG. 26 depicts a circuit diagram showing an example of a circuit configuration of a signal processing device included in the light detector included in the distance measuring device according to the second arrangement.
FIG. 27 depicts a schematic diagram showing an example of an operation of the signal processing device at the first time in a ranging operation of the distance measuring device according to the second arrangement.
FIG. 28 depicts a schematic diagram showing an example of an operation of the signal processing device at the second time in the ranging operation of the distance measuring device according to the second arrangement.
FIG. 29 depicts a schematic diagram showing an example of an operation of the signal processing device at the third time in the ranging operation of the distance measuring device according to the second arrangement.
FIG. 30 depicts a schematic diagram showing an example of a ranging result output method in a ranging operation of the distance measuring device according to the second arrangement.
FIG. 31 depicts a block diagram showing an example of a configuration of a light detector included in a distance measuring device according to the third arrangement.
FIG. 32 depicts a circuit diagram showing an example of a circuit configuration of a signal processing device included in the light detector included in the distance measuring device according to the third arrangement.
FIG. 33 depicts a schematic diagram showing an example of an operation of a column selector at the first time in a ranging operation of the distance measuring device according to the third arrangement.
FIG. 34 depicts a schematic diagram showing an example of the operation of the column selector at the second time in the ranging operation of the distance measuring device according to the third arrangement.
FIG. 35 depicts a schematic diagram showing an example of a plan layout of a sensor array and a column selector included in a light detector according to a modification.

### DETAILED DESCRIPTION

In general, according to one arrangement, a signal processing device configured to process a plurality of intermittently input signals. The signal processing device includes a plurality of input ends, first to Nth output ends, and a control circuit. The plurality of input ends is configured to input the plurality of signals, respectively. The first to Nth output ends are respectively associated with first to Nth groups (N is an integer of not less than two). Each of the first to Nth groups includes M (M is an integer of not less than two) consecutive input ends. The control circuit is configured to output, to the kth output end, a signal based on a signal obtained by adding a plurality of signals respectively input to the M consecutive input ends of the kth group (k an integer of not less than 1 and not more than N). The control circuit is configured to switch combinations of input ends as the M input ends to set different combinations at the first setting to the Mth setting.

Hereinafter, arrangements will be described with reference to the drawings. Each arrangement exemplifies a device and a method for embodying a technical idea of the invention. The drawings are schematic or conceptual, and the dimensions and ratios, etc. in the drawings are not always the same as those of the actual products. In the drawings to be referred to below, an "X direction" and a "Y direction" correspond to directions intersecting each other. For example, the X and Y directions respectively correspond to the horizontal and vertical directions. The technical idea of the present invention is not specified by the shapes, structures, arrangements, etc. of the structural elements.

In the following descriptions, structural elements having approximately the same function and configuration will be denoted by the same reference sign. The numbers after the letters that make up the reference signs are used to distinguish between elements referenced by reference signs containing the same characters and that have a similar configuration. When there is no need to distinguish components denoted by reference signs containing the same letters from each other, such components may be referred to by a reference sign containing the letters only.

### <1> First Arrangement

A distance measuring device 1 according to a first arrangement is, for example, a type of LiDAR (Light Detection and Ranging) capable of measuring the distance between the distance measuring device 1 and a target object. The distance measuring device 1 according to the first arrangement will be described in detail below.

### <1-1> Configuration

### <1-1-1> Overall Configuration of Distance Measuring Device 1

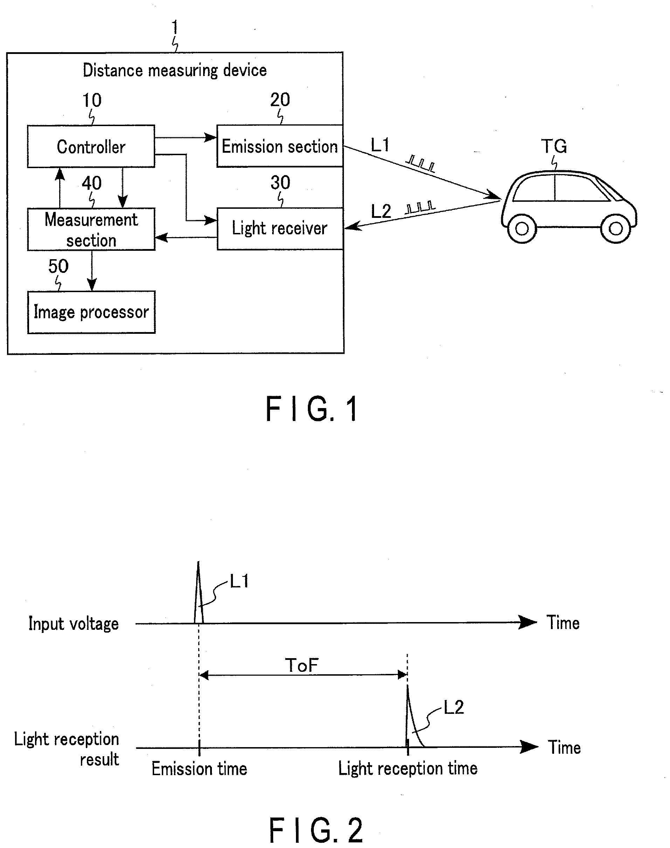

FIG. 1 depicts a schematic diagram showing an example of an overall configuration of the distance measuring device 1 according to the first arrangement. As shown in FIG. 1, in this example, a vehicle is located in front of the distance measuring device 1 as an example of a ranging target object TG. The distance measuring device 1 includes a controller 10, an emission section 20, a light receiver 30, a measurement section 40, and an image processor 50.

The controller 10 controls an overall operation of the distance measuring device 1. The controller 10 includes, for example, a CPU (Central Processing Unit), a ROM (Read Only Memory), a RAM (Random Access Memory), and an oscillator, all of which are not shown. The ROM stores a program and the like used for an operation of the distance measuring device 1. The CPU controls the emission section 20, the light receiver 30, the measurement section 40, and the image processor 50 according to the program stored in the ROM. The RAM is used as a working area of the CPU. The oscillator is used for generating an intermittent pulse signal. The controller 10 may also be configured to be capable of executing various data processing and arithmetic processing.

The emission section 20 intermittently generates and emits laser light. Intermittently generated laser light is referred to as "pulse laser" hereinafter. Pulse laser is emitted with a predetermined pulse width and a predetermined period. The pulse laser is used for measuring the distance between the distance measuring device 1 and the target object TG. In the present specification, the laser light emitted from the emission section 20 is referred to as "outgoing light L1". The outgoing light L1 reflected by the outside of the distance measuring device 1 is referred to as "reflected light L2".

The light receiver 30 detects light incident on the distance measuring device 1 and transfers a light reception result to the measurement section 40. In other words, the light receiver 30 converts the light incident on the distance measuring device 1 into an electric signal and transfers the converted electric signal to the measurement section 40. The light receiver 30 is used for detecting the reflected light L2 intermittently incident on the distance measuring device 1. The light receiver 30 receives environmental light and stray light (light generated inside the device) in addition to the reflected light L2. The environmental light and stray light correspond to noise. For the sake of simplicity, a description of noise such as environmental light will be omitted as appropriate.

The measurement section 40 measures the time at which the light receiver 30 detects the reflected light L2 based on the light reception result transferred from the light receiver 30. Then, the measurement section 40 measures the distance between the distance measuring device 1 and the target object TG based on the time at which the outgoing light L1 is emitted from the emission section 20 and the time at which the light receiver 30 detects the reflected light L2. The time at which the outgoing light L1 is emitted from the emission section 20 is, for example, reported from the controller 10. Further, the measurement section 40 may input a part of a result of processing an electric signal that is input from the light receiver 30 to the controller 10.

The image processor 50 acquires the measurement result obtained by the measurement section 40 and generates an image including distance information by using the acquired measurement result. The image generated by the image processor 50 includes distance information between the distance measuring device 1 and the target object TG. In addition, the image generated by the image processor 50 is referred to by, for example, a control program in a vehicle including the distance measuring device 1. Note that the image processor 50 may be coupled to the outside of the distance measuring device 1.

In the distance measuring device 1 according to the first arrangement, the controller 10 is described as one block independent of the emission section 20 and the light receiver 30. The present invention is not limited to this, and some of the functions of the controller 10 may be implemented in the light receiver 30 and the measurement section 40. Thereby, the distance measuring device 1 can perform fine manipulations in a timely manner. Controls that are not particularly clearly described in the following descriptions are assumed to be executed by the controller 10 for the sake of simplicity.

FIG. 2 depicts a schematic diagram that outlines a ranging method of the distance measuring device 1 according to the first arrangement. The waveform of an input voltage indicates a temporal change in voltage to be supplied to a light source included in the emission section 20. The waveform of a light reception result indicates a temporal change in strength of an electric signal based on light detected by the light receiver 30. As shown in FIG. 2, when a pulse signal is supplied to the light source of the emission section 20, the outgoing light L1 is generated and emitted based on a rise of the pulse signal. Then, the outgoing light L1 is applied to the target object TG, and the light receiver 30 detects the reflected light L2 reflected from the target object TG.

The measurement section 40 calculates a time of flight (ToF) of the outgoing light L1 based on a difference between an emission time at which the outgoing light L1 is emitted from the emission section 20 and a light-receiving time at which the light receiver 30 detects the reflected light L2. Then, the measurement section 40 measures (ranges) the distance between the distance measuring device 1 and the target object TG based on the time of flight of the outgoing light L1 and the velocity of the laser light. Such a ranging method of the distance measuring device 1 may also be called a "ToF method". The measurement section 40 outputs a ranging result for each set of the outgoing light L1 and the reflected light L2 that the distance measuring device 1 emits and receives.

It suffices that the measurement section 40 decides the emission time based at least on the time relating to emission of the outgoing light L1 and decides the light-receiving time based on the time relating to light reception of the reflected light L2. For example, the measurement section 40 may decide the emission time and the light-receiving time based on the rise time of a signal or based on the peak time of a signal. Processing of the measurement section 40 may be performed by the controller 10.

### <1-1-2> Configuration of Emission Section 20

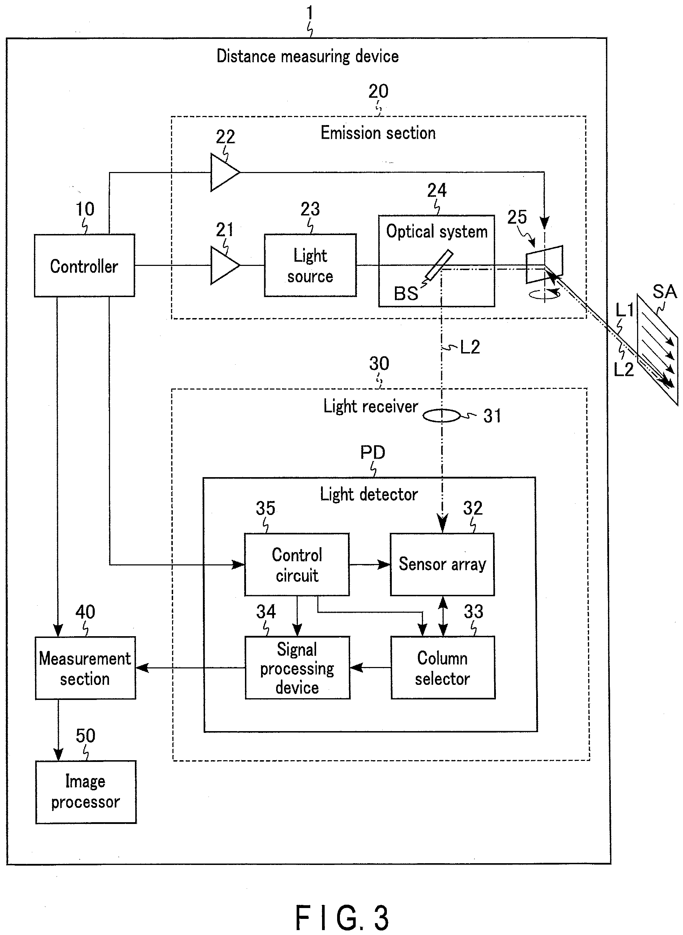

FIG. 3 depicts a schematic diagram showing an example of a configuration of the emission section 20 and the light receiver 30 included in the distance measuring device 1 according to the first arrangement. The detailed configuration of the emission section 20 will be described first with reference to FIG. 3. As shown in FIG. 3, the emission section 20 includes, for example, drivers 21 and 22, a light source 23, an optical system 24, and a mirror 25.

The driver 21 generates a drive current according to a pulse signal input from the oscillator of the controller 10. Then, the driver 21 supplies the generated drive current to the light source 23. That is, the driver 21 functions as a current supply source of the light source 23.

The driver 22 generates a drive current under the control of the controller 10. Then, the driver 22 supplies the generated drive current to the mirror 25. That is, the driver 22 functions as a power supply circuit of the mirror 25.

The light source 23 is a laser light source, such as a laser diode. The light source 23 intermittently emits laser light (outgoing light L1) based on the intermittent drive current (pulse signal) supplied from the driver 21. The laser light (pulse laser) emitted by the light source 23 is incident on the optical system 24.

The optical system 24 can include a plurality of lenses and optical elements. The optical system 24 is arranged on an optical path of the outgoing light L1 emitted by the light source 23. The optical system 24 collimates the incident outgoing light L1 and guides the collimated outgoing light L1 to the mirror 25. In addition, the optical system 24 includes a beam splitter BS. The outgoing light L1 emitted from the light source 23 passes through the beam splitter BS and is applied to the mirror 25. The beam splitter BS further reflects the reflected light L2 applied from the mirror 25 toward the light receiver 30.

The mirror 25 is driven based on the drive current supplied from the driver 22 and reflects the outgoing light L1 incident on the mirror 25. The outgoing light L1 reflected by the mirror 25 is emitted outside of the distance measuring device 1. In addition, the mirror 25 reflects the reflected light L2 from the outside and guides the reflected light L2 to the optical system 24. The reflecting surface of the mirror 25 is, for example, configured to be rotatable or swingable around two axes intersecting each other. It is conceivable to use a polygon mirror, a revolving mirror, or a single-axis MEMS mirror, as the mirror 25. The present specification describes a case in which the mirror 25 is a revolving mirror (two-sided mirror) having two reflecting surfaces.

The distance measuring device 1 changes the emitting direction of the outgoing light L1 by controlling the mirror 25 so as to scan an area to be ranged. The distance measuring device 1 measures the various distances from the target object TG by executing measurement at a plurality of points in an area to be scanned (to be referred to as a scan area SA hereinafter). The distance measuring device 1 can sequentially acquire the distances from the target object TG in front of the distance measuring device 1 by continuously executing scanning. A set of ranging results at a plurality of points corresponding to single scanning is referred to as a "frame" hereinafter. It suffices that the emission section 20 has a configuration capable of scanning using laser light. For example, the emission section 20 may further include an optical system arranged on the optical path of laser light reflected by the mirror 25.

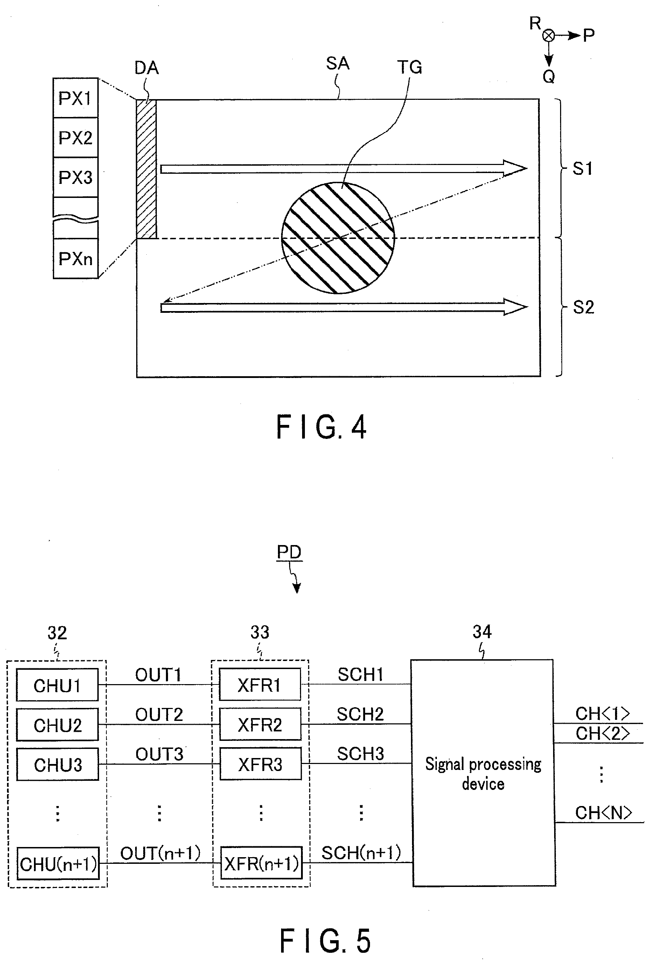

FIG. 4 depicts a schematic diagram showing an example of a ranging result of one frame obtained by the distance measuring device 1 according to the first arrangement. FIG. 4 schematically shows the scan area SA and the visualized distance data of the target object TG obtained by the scan. In the case in FIG. 4, the outgoing light L1 is applied to the PQR space. The R-axis is an axis extending from the distance measuring device 1 to the target object TG. For example, the R-axis extends along the center of the outgoing light L1 in the emitting direction. The P-Q plane is a plane that is orthogonal to the R-axis and concentrically spreads from the emission port of the outgoing light L1. The P-axis and the Q-axis are axes orthogonal to each other within the P-Q plane. Distance data is generated as, for example, mapping on the P-Q plane.

The distance measuring device 1 generates a plurality of distance data corresponding to a detection area DA smaller than the scan area SA for each measurement period. The detection area DA includes, for example, n (n is an integer of two or more) pixels PX (PX1, PX2, PX3,..., and PXn) arrayed one-dimensionally. One distance data is generated for each pixel PX. The n pixels PX are arrayed along, for example, the Q-axis. The distance measuring device 1 repeatedly executes the above processing for each measurement period while one-dimensionally shifting the detection area DA along the P-axis. The consecutive detection areas DA may overlap each other or be separated from each other. This allows the distance measuring device 1 to generate distance data concerning an area corresponding to a first row S1 in the scan area SA.

The distance measuring device 1 then also executes processing similar to the processing executed for the first row S1 to a second row S2 in the scan area SA. If a revolving mirror having two reflecting surfaces is used as the mirror 25, two-row distance data constituted by the first row S1 and the second row S2 is generated. This allows the distance measuring device 1 to map, in the scan area SA, the distance data from an object present in the PQR space, thereby recognizing the distance from the target object TG within the space PQR. The number of pixels along the Q-axis of one-frame ranging result increases with an increase in the number of rows assigned to measurement in the scan area SA.

Note that the above scanning method is called "multi-channel raster scanning". As a means for implementing multi-channel raster scanning, the outgoing light L1 having an irradiation surface elongated in the longitudinal direction is used. In this case, the emission section 20 includes, for example, an anisotropic aspherical collimator lens. In addition, as the mirror 25, a polygon mirror, revolving mirror, biaxial mirror, or the like which has a plurality of reflecting surfaces having different tilt angles is used. The distance measuring device 1 may use an OPA (Optical Phased Array) method as another scanning method. The number of rows and the scanning direction in single scanning may be set to other settings. The operations and effects provided by the distance measuring device 1 according to the first arrangement do not depend on the scanning method of the outgoing light L1.

### <1-1-3> Configuration of Light Receiver 30

The specific configuration of the light receiver 30 included in the distance measuring device 1 according to the first arrangement will be described again with reference to FIG. 3. As shown in FIG. 3, the light receiver 30 includes, for example, an optical system 31 and a light detector PD. The light detector PD includes, for example, a sensor array 32, a column selector 33, a signal processing device 34, and a control circuit 35.

The optical system 31 collects the reflected light L2 incident on the distance measuring device 1 in the sensor array 32 of the light detector PD. The optical system 31 includes at least one lens. For example, the optical system 31 has a microlens array provided so as to overlap the sensor array 32.

The sensor array 32 converts the light incident via the optical system 31 into an electric signal. The sensor array 32 includes for example, a photomultiplier element. As the photomultiplier element, for example, a single-photon avalanche diode (SPAD), which is a type of avalanche photodiode, is used. The electric signal (light reception result) converted by the sensor array 32 is output to the signal processing device 34 via the column selector 33.

The column selector 33 selects any one of sets of a plurality of SPADs included in the sensor array 32 under the control of the control circuit 35. The selected set of the plurality of SPADs is electrically coupled to the signal processing device 34.

The signal processing device 34 adjusts the output level of the electric signal transferred from the sensor array 32 and outputs the resultant signal to the measurement section 40. The signal processing device 34 has a function of switching combinations of input signals. The specific configuration of the signal processing device 34 will be described later.

The control circuit 35 controls the overall operation of the light detector PD under the control of the controller 10. Processing of the control circuit 35 may be performed by the controller 10.

The respective components of the light detector PD may be formed on the same substrate (chip) or on different substrates. The signal processing device 34 may be externally coupled to the light detector PD. The measurement section 40 may have the function of the signal processing device 34.

### (Configuration of Light Detector PD)

FIG. 5 depicts a block diagram showing an example of the detailed configuration of the light detector PD included in the distance measuring device 1 according to the first arrangement. As shown in FIG. 5, the sensor array 32 includes a plurality of channel units (groups) CHU1 to CHU(n+1) (n is an integer of two or more). The column selector 33 includes a plurality of selection-and-adder circuits XFR1 to XFR(n+1).

Each channel unit CHU includes a plurality of SPADs and corresponds to a sub-pixel. Each sub-pixel may be simply called a "pixel". The plurality of channel units CHU1 to CHU(n+1) of the sensor array 32 are respectively coupled to the plurality of selection-and-adder circuits XFR1 to XFR(n+1) via output node sets OUT1 to OUT(n+1). Each output node set OUT includes a plurality of output nodes. The output nodes will be described in detail later.

Each selection-and-adder circuit XFR selectively activates a plurality of SPADs included in the associated channel unit CHU. Each SPAD in the active state can detect the reflected light L2. The plurality of selection-and-adder circuits XFR1 to XFR(n+1) of the column selector 33 are coupled to the signal processing device 34 via sub-channels SCH1 to SCH(n+1), respectively. This allows the selection-and-adder circuit XFRi (1 ≤ i ≤ (n + 1)) to adde the electric signals input via the output node set OUTi from the SPADs in the active state and transfer the resultant signal to the signal processing device 34 by using the sub-channel SCHi.

The signal processing device 34 adds electric signals from the two consecutive sub-channels SCH and outputs the resultant signal to a channel CH associated with the two consecutive sub-channels SCH. In other words, the signal processing device 34 adds the electric signals transferred from two adjacent sub-pixels and outputs the resultant signal to the measurement section 40. In this specification, the number of signal lines used for the transfer of electric signals between the signal processing device 34 and the measurement section 40 corresponds to a channel count N.

Note that in the light detector PD according to the first arrangement, the number of channel units CHU and the number of selection-and-adder circuits XFR are designed based on the channel count N. In the first arrangement, N = n/2. More specifically, in the case of channel count N = 80 (that is, the light detector PD having 80-channel outputs), the column selector 33 is coupled to the signal processing device 34 via 161 sub-channels SCH.

For the sake of simplicity, the following will describe a case in which N = 4, that is, n = 8, and the light detector PD includes the four channels CH1 to CH4, the nine sub-channels SCH1 to SCH9, the nine selection-and-adder circuits XFR1 to XFR9, the nine output node sets OUT1 to OUT9, and the nine channel units CHU1 to CHU9.

### (Circuit Configurations of Sensor Array 32 and Column Selector 33)

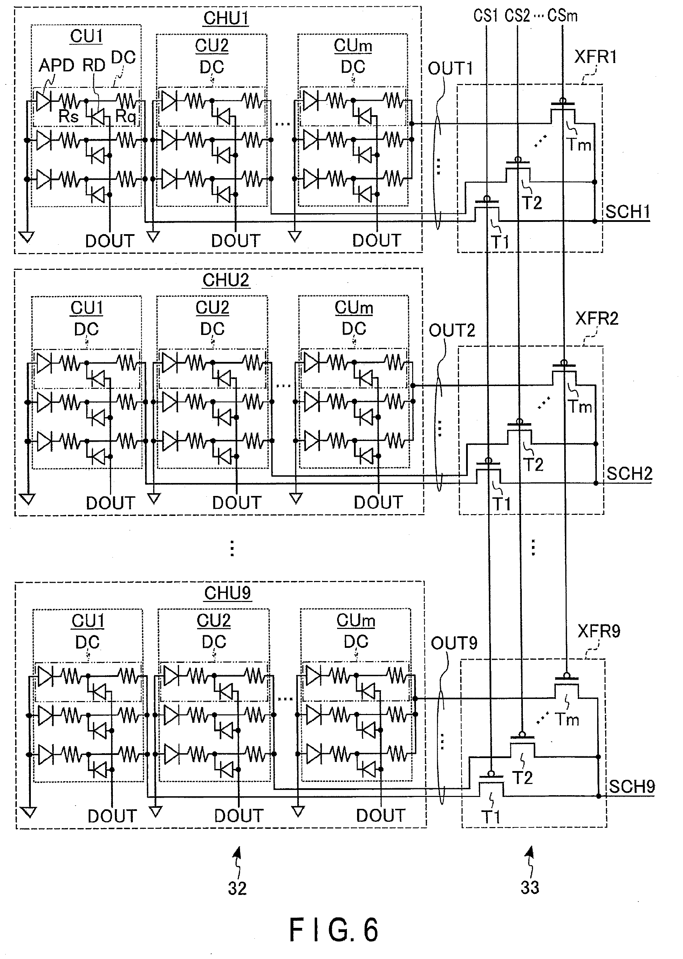

FIG. 6 depicts a circuit diagram showing an example of the circuit configuration of the sensor array 32 and the column selector 33 included in the light detector PD included in the distance measuring device 1 according to the first arrangement. As shown in FIG. 6, each channel unit CHU includes a plurality of cell units CU1 to CUm (m is an integer of two or more). Each cell unit CU includes a plurality of light detection elements DC. The following will describe a case in which each cell unit CU includes three light detection elements DC. Each light detection element DC includes, for example, a diode APD, a quench resistor Rq, a protection resistor Rs, and a diode RD which are coupled in series. Each selection-and-adder circuit XFR includes, for example, transistors T1 to Tm.

The diode APD is, for example, a SPAD. The diode APD has an input end coupled to a bias power supply and an output end coupled to the first end of the quench resistor Rq. The quench resistor Rq functions as a quench resistor. The second ends of the plurality of quench resistors Rq included in the same cell unit CU are coupled to each other. That is, the output of each cell unit CU is coupled to the outputs of the plurality of light detection elements DC so as to add output currents (current signals). The same voltage is applied to the input ends (cathodes) of all the diodes APD in the light detector PD. The output end (anode) of each diode APD is biased to a breakdown voltage (for example, about -30 V) equal to or more than the avalanche breakdown voltage. This allows the diode APD to undergo avalanche breakdown based on the reception of the reflected light L2 and generate Geiger discharge.

The quench resistor Rq suppresses the voltage difference between the two ends of the diode APD that has undergone avalanche breakdown (quenching). The diode APD can stop Geiger discharge owing to the quench resistor Rq and the like. The diode APD can then generate Geiger discharge again by receiving the reflected light L2 after the lapse of a predetermined time since Geiger discharge is stopped. The time interval from the instant the diode APD generates Geiger discharge to the instant the diode APD can generate Geiger discharge again is very short as compared with the pulse period of the outgoing light L1. For this reason, the diode APD can periodically perform measurement. A set of the output nodes of each of the plurality of cell units CU1 to CUm included in the channel unit CHUi corresponds to the output node set OUTi shown in FIG. 5.

The protection resistor Rs is coupled between the diode APD and the quench resistor Rq. The output end (anode) of the diode RD is coupled to the node between the diode APD and the quench resistor Rq. The input end (cathode) of the diode RD is coupled to a node DOUT. The input ends of the respective diodes RD are commonly coupled to the node DOUT. That is, the input ends of the respective diodes RD may be coupled to each other. The node DOUT is coupled to a potential slightly lower (> a threshold voltage Vth of the diode APD) than the breakdown voltage of the diode APD. With this configuration, if the potential of the non-selected output node set OUT drops, carriers are discharged to the node DOUT to protect the associated transistors T1 to Tm.

The cell unit CU is used as the minimum unit of an area where the sensor array 32 can detect light. The cell unit CU may be called a sub-pixel or may be simply called a pixel. The number of light detection elements DC (diodes APD) constituting the cell unit CU may be at least one or more. The cell unit CU including the plurality of diodes APD may be called a silicon photomultiplier (SiPM). The dynamic range of light that can be detected by the sensor array 32 can change in accordance with the number of diodes APD included in one cell unit CU. In addition, the direction of an output current from the diode APD can change in accordance with the polarity of the diode APD.

A column address is assigned to each cell unit CU. Each cell unit CU can be specified by a column address. The diode APD is configured to be set in an active state or an inactive state by the control circuit 35. The diode APD in the active state can detect the light incident on the diode APD and outputs an optical signal indicating a detection result to the output end. The diode APD in the inactive state is generally in a power saving state and detects no light. Note that a row address may be assigned to each cell unit CU.

The plurality of transistors T1 to Tm included in the selection-and-adder circuit XFRi (1 ≤ i ≤ (n + 1)) are respectively coupled to the plurality of cell units CU1 to CUm included in the channel unit CHUi. More specifically, the first end of a transistor Tj (1 ≤ j ≤ m) of the selection-and-adder circuit XFRi is coupled to the second end of each of the plurality of quench resistors Rq included in the cell unit CUj of the channel unit CHUi. Each of the plurality of transistors T1 to Tm is, for example, a p-type metal-oxide-semiconductor (MOS) transistor.

The second end of each of the plurality of transistors T1 to Tm included in the selection-and-adder circuit XFRi is coupled to the sub-channel SCHi. The current signals input to the sub-channel SCH are added by coupling the plurality of transistors T1 to Tm in parallel. That is, the selection-and-adder circuit XFR constitutes a circuit equivalent to an adder circuit. Control signals CS1 to CSm are respectively input to the gate ends of the plurality of transistors T1 to Tm included in the selection-and-adder circuit XFRi. That is, the transistors Tj of the selection-and-adder circuits XFR1 to XFR9 are controlled by the common control signal CS.

The control circuit 35 can set at least one cell unit CU of the cell units CU arrayed in the X direction to an active state or an inactive state via the column selector 33. More specifically, the control circuit 35 selects at least one cell unit CU of the channel unit CHUi by using the control signals CS1 to CSm. In other words, the control circuit 35 selectively turns on at least one of the transistors T1 to Tm of each channel unit CHU by using the control signals CS1 to CSm. In other words, the column selector 33 is configured to selectively couple at least one of the plurality of cell units CU respectively associated with the plurality of sub-channels SCH.

The control circuit 35 sets the voltage of each sub-channel SCH to, for example, about 0 V to several V. This allows the control circuit 35 to apply a reverse bias to each diode APD of the light detection element DC corresponding to at least one transistor T in an ON state. This reverse bias is a potential difference that can cause avalanche breakdown in the diode APD. As a result, the channel unit CHUi in the light detector PD can output the sum of currents generated in the plurality of light detection elements DC in the selected cell unit CVj to the sub-channel SCHi for each measurement period.

Note that as elements corresponding to the transistors T1 to Tm, other types of switch elements may be used as long as they can execute the operation to be described later. In addition, the sensor array 32 may include an active quench circuit in place of the single quench resistor Rq. The active quench circuit executes quenching under the control of the control circuit 35 and can execute quenching at high speed as compared with the case in which the quench resistor Rq is used. In the following description, the quench resistor Rq may be replaced with an active quench circuit, and the output end of the quench resistor Rq may be replaced with the output end of the active quench circuit. An output signal from the channel unit CHU can be an analog current signal in a case in which the quench resistor Rq is used and can be a digital signal in a case in which the active quench circuit is used. In the case of the use of the active quench circuit, an adder is used to add output signals.

Note that an n-type MOS transistor may be provided in place of the diode RD and the protection resistor Rs. One and the other of the source and the drain of this n-type MOS transistor may be respectively coupled to an output node included in the associated output node set OUT and to a power supply node VSS or the node DOUT, and the control signal CSm may be input to the gate end.

### (Plan Layout of Sensor Array 32 and Column Selector 33)

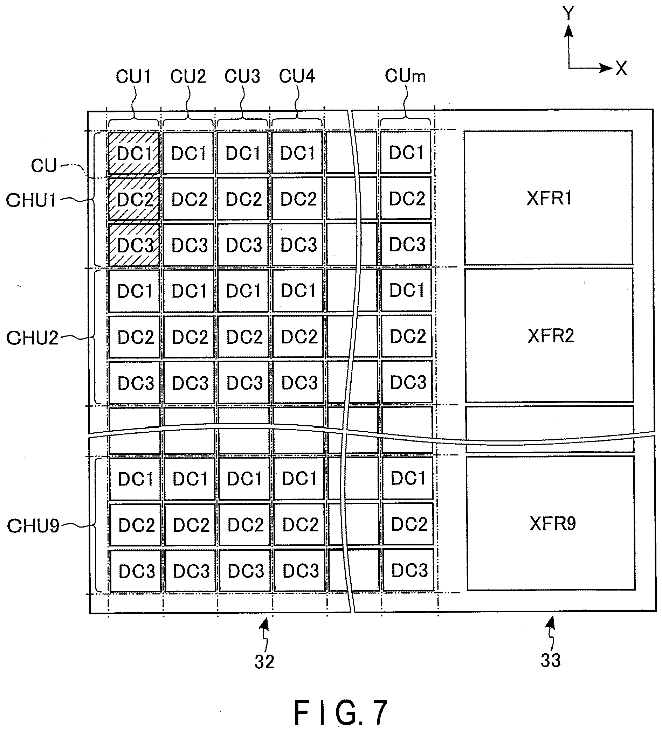

FIG. 7 depicts a plan view showing an example of a plan layout of the sensor array 32 and the column selector 33 included in the light detector PD included in the distance measuring device 1 according to the first arrangement. A grid of a two-dot chain line added in FIG. 7 exemplarily shows an area for each cell unit CU. As shown in FIG. 7, in the light detector PD, the sensor array 32 has, for example, a rectangular light-receiving surface. The sensor array 32 and the column selector 33 are arranged side by side in the X direction. The sensor array 32 and the column selector 33 are formed on the same semiconductor substrate.

In the area of the sensor array 32, in the case of N = 4, the channel units CHU1 to CHU9 provided such that each extends in the X direction (row direction) are arranged in the Y direction (column direction). In the area of each channel unit CHU, the plurality of cell units CU1 to CUm are arranged in the X direction. In the area of each cell unit CU, the light detection elements DC1 to DC3 are arranged in the Y direction. With this arrangement, the cell unit CU has a width corresponding to one light detection element DC along the X direction and a width corresponding to the number of light detection elements DC along the Y direction. The channel unit CHU has a width corresponding to m cell units CU along the X direction and a width corresponding to one cell unit CU along the Y direction. The area of the sensor array 32 has a width corresponding to about one channel unit CHU along the X direction and a width corresponding to about (n + 1) channel units CHU along the Y direction.

In the area of the column selector 33, the selection-and-adder circuits XFR are arranged adjacent to the associated channel units CHU. More specifically, in the case of N = 4, the selection-and-adder circuits XFR1 to XFR9 are respectively arranged adjacent to the channel units CHU1 to CHU9. The width of the area of one channel unit CHU along the Y direction is designed to be, for example, almost equal to the width of one selection-and-adder circuit XFR along the Y direction. With this arrangement, the area of the column selector 33 has a width corresponding to about one selection-and-adder circuit XFR along the X direction and a width corresponding to, for example, (n + 1) selection-and-adder circuits XFR along the X direction. Note that the shape of the area of the column selector 33 is not physically and optically limited unlike the sensor array 32. This makes the circuit design of the area of the column selector 33 have a higher degree of freedom than the sensor array 32.

Although the first arrangement has exemplified the case in which the channel units CHU1 to CHU9 are used in each of the first and second rows S1 and S2 in scanning, the present invention is not limited to this. The light detector PD may have circuits similar to the sensor array 32 and the column selector 33 described in correspondence with each row in scanning. In this case, for example, the sub-channels SCH associated with each other are coupled to each other between the plurality of column selectors 33. Scans on a plurality of rows in the measurement of the scan area SA need not overlap each other or be rectangular. In general, in one measurement, the fixed number (for example, a plurality) of light detection elements DC in each of the Y and X directions are set to an active state. The Y-direction position of the fixed number of light detection elements DC set to the active state can be changed for every measurement.

### (Circuit Configuration of Signal Processing Device 34)

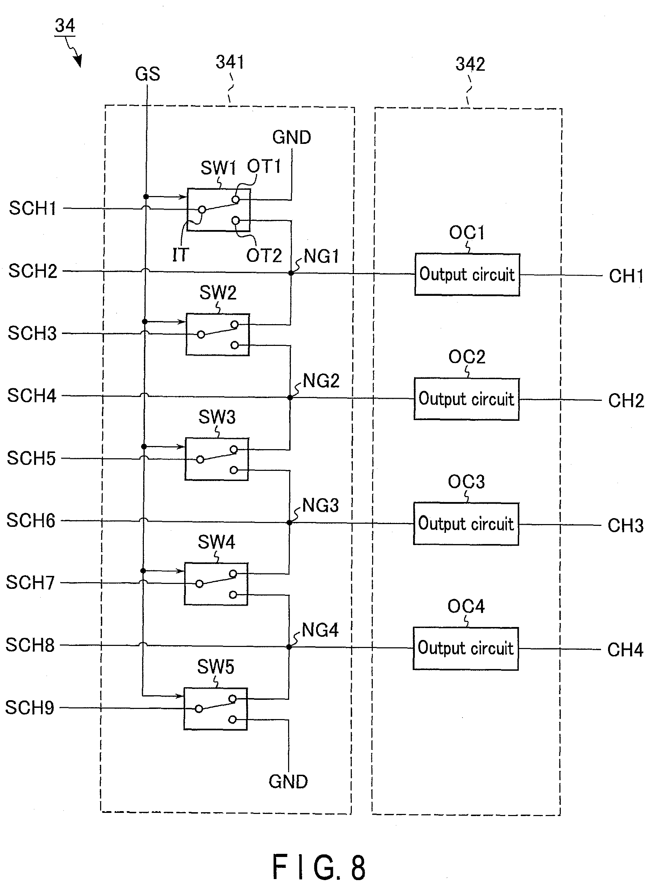

FIG. 8 depicts a circuit diagram showing an example of the circuit configuration of the signal processing device 34 included in the light detector PD included in the distance measuring device 1 according to the first arrangement. As shown in FIG. 8, the signal processing device 34 includes a switch part 341 and an output part 342. The switch part 341 is a circuit for switching combinations of the plurality of sub-channels SCH. In the case of N = 4, the switch part 341 includes a plurality of switches SW1 to SW5. The output part 342 is a circuit that amplifies, for example, a plurality of signals input via the switch part 341 and respectively outputs the amplified signals to the plurality of channels CH. In the case of N = 4, the output part 342 includes a plurality of output circuits OC1 to OC4.

Each switch SW is a three-way switch and has an input end IT and output ends OT1 and OT2. Each switch SW electrically couples between the input end IT and the output end OT1 or between the input end IT and the output end OT2 based on a control signal GS. The control signal GS is a signal generated by the control circuit 35. Each output circuit OC can adjust the output level of the signal input to the input end and output the resultant signal to the channel CH coupled to the output end. Each output circuit OC can also adjust the voltage applied to the output end of the diode APD by adjusting the voltage of a node NG coupled to the input end.

The input end IT of the switch SW is coupled to the sub-channel SCH1. The output ends OT1 and OT2 of the switch SW1 are respectively coupled to a ground node GND and a node NG1. The node NG1 is coupled to the sub-channel SCH2 and the input end of the output circuit OC1. The output end of the output circuit OC1 is coupled to the channel CH1.

The input end IT of the switch SW2 is coupled to the sub-channel SCH3. The output ends OT1 and OT2 of the switch SW2 are respectively coupled to the node NG1 and a node NG2. The node NG2 is coupled to the sub-channel SCH4 and the input end of the output circuit OC2. The output end of the output circuit OC2 is coupled to the channel CH2.

The input end IT of the switch SW3 is coupled to the sub-channel SCH5. The output ends OT1 and OT2 of the switch SW3 are respectively coupled to the node NG2 and a node NG3. The node NG3 is coupled to the sub-channel SCH6 and the input end of the output circuit OC3. The output end of the output circuit OC3 is coupled to the channel CH3.

The input end IT of the switch SW4 is coupled to the sub-channel SCH7. The output ends OT1 and OT2 of the switch SW4 are respectively coupled to the node NG3 and a node NG4. The node NG4 is coupled to the sub-channel SCH8 and the input end of the output circuit OC4. The output end of the output circuit OC4 is coupled to the channel CH4.

The input end IT of the switch SW5 is coupled to the sub-channel SCH9. The output ends OT1 and OT2 of the switch SW5 are respectively coupled to the node NG4 and the ground node GND.

That is, in the switch part 341, a switch SWk (2 ≤ k ≤ N + 1) is configured such that the input end IT is coupled to a sub-channel SCH(2×k-1), the output end OT1 is coupled to a node NG(k-1), and the output end OT2 is coupled to a node NGk. In the switch part 341, the output end OT1 of the switch SW (for example, the switch SW1) assigned to one end portion and the output end OT2 of the switch SW (for example, the switch SW5) assigned to the other end portion are, for example, grounded.

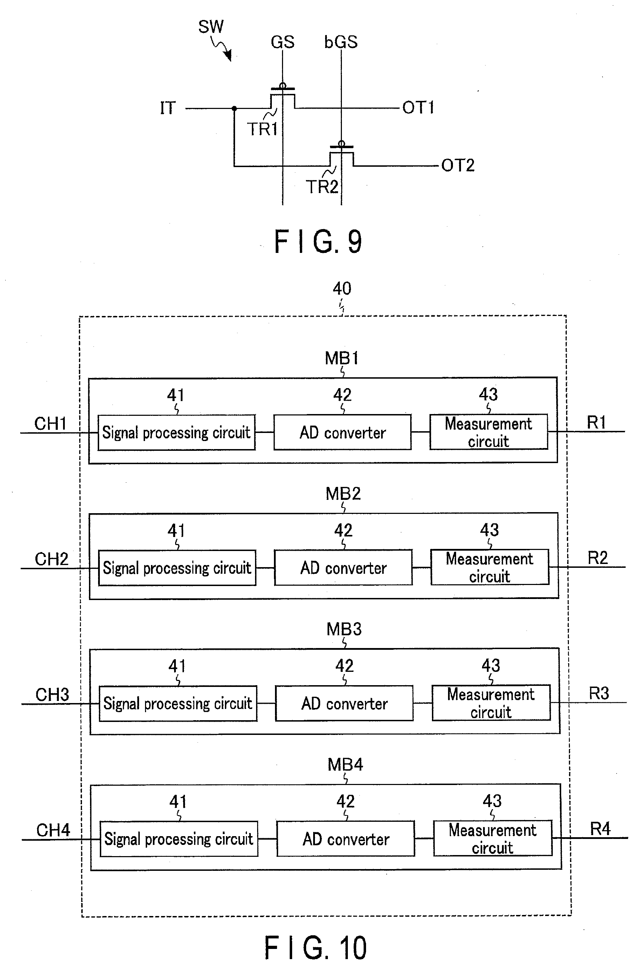

FIG. 9 depicts a circuit diagram showing an example of the circuit configuration of the switch SW in the distance measuring device 1 according to the first arrangement. As shown in FIG. 9, each switch SW includes, for example, transistors TR1 and TR2. The transistors TR1 and TR2 each are a p-type MOS transistor. The transistors TR1 and TR2 each have the first end (source) coupled to the input end IT of the switch SW. The transistors TR1 and TR2 have the second ends (drains) respectively coupled to the output ends OT1 and OT2 of the switch SW. The control signal GS is input to the gate end of the transistor TR1. An inversion signal bGS of the control signal GS is input to the gate end of the transistor TR2. That is, a signal pair (two signal lines) constituted by the control signal GS and the inversion signal bGS is supplied as the control signal GS to the switch SW. This allows the switch SW to function as a three-way switch. Note that the transistors TR1 and TR2 each may be an n-type MOS transistors. The setting of the control signal GS input to the switch SW can be changed as appropriate in accordance with the polarity of the transistor TR of the switch SW.

### <1-1-4> Configuration of Measurement Section 40

FIG. 10 depicts a block diagram showing an example of the configuration of a measurement section included in the distance measuring device 1 according to the first arrangement. As shown in FIG. 10, the measurement section 40 includes a plurality of measurement blocks MB. Measurement blocks MB1 to MB4 respectively process the signals input to the channels CH1 to CH4. Each of the plurality of measurement blocks MB includes a signal processing circuit 41, an AD (Analog to Digital) converter 42, and a measurement circuit 43.

The signal processing circuit 41 performs processing such as amplification of a signal input to the associated channel CH and outputs the processed signal to the AD converter 42. The amplifier used in the signal processing circuit 41 is, for example, a transimpedance amplifier (TIA) .

The AD converter 42 converts an analog signal input from the signal processing circuit 41 into a digital signal and outputs the converted digital signal to the measurement circuit 43. The measurement section 40 may include a time-to-digital (TD) converter instead of the AD converter 42 or may include both an AD converter and a TD converter.

The measurement circuit 43 measures the distance between the target object TG and the distance measuring device 1 based on the digital signal input from the AD converter 42 and outputs the measurement result to the outside. In the present example, the measurement blocks MB1 to MB4 process the signals input to the channels CH1 to CH4, respectively, and output measurement results R1 to R4, respectively.

### <1-2> Operation

A method of controlling the column selector 33 and the operation of the signal processing device 34 will be sequentially described in association with the ranging operation of the distance measuring device 1 according to the first arrangement.

### <1-2-1> Method of Controlling Column Selector 33

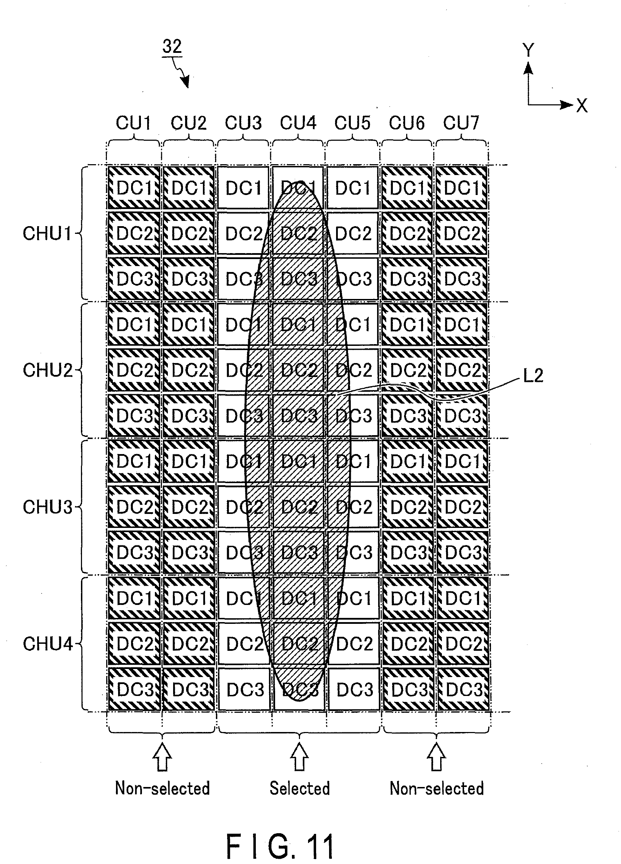

FIG. 11 depicts a plan view showing an example of the method of controlling the column selector 33 in the ranging operation of the distance measuring device 1 according to the first arrangement. FIG. 11 shows an example of the state of the sensor array 32 set under the control of the column selector 33. For the sake of simplicity, FIG. 11 shows an area including the cell units CU1 to CU7 of each of the channel units CHU1 to CHU4. Referring to FIG. 11, the light detection elements DC corresponding to the cell units CU in the selected state are indicated without hatching, whereas the light detection elements DC corresponding to the cell units CU in the non-selected state are indicated by thick hatching. In addition, the area irradiated with the reflected light L2 on the sensor array 32 is indicated by the area with thin line hatching.

As shown in FIG. 11, in the present example, the column selector 33 has selected the cell units CU3 to CU5 in accordance with the position where the reflected light L2 is applied. In this case, the control circuit 35 sets each of the control signals CS3 to CS5 to "L" level and sets the remaining control signals CS to "H" level. "L" level is a logic level that can turn on the transistor T. "H" level is a logic level that can turn off the transistor T. Accordingly, in each selection-and-adder circuit XFR included in the column selector 33, the transistors T3 to T5 are set to the ON state, and the transistors T1, T2, T6, and T7 are set to the OFF state.

With this arrangement, current paths are formed between the cell units CU3 to CU5 of the channel unit CHUi (1 ≤ i ≤ n + 1) and the sub-channel SCHi, and the current paths between the remaining cell units CU and the sub-channel SCHi are cut off. In other words, the light detection elements DC (that is, the SPADs) included in the cell unit CU at the irradiation position of the reflected light L2 are set to the active state so as to be set to a state in which light can be detected. In contrast to this, the light detection elements DC included in the cell unit CU at a position where no reflected light L2 is applied are set to the non-active state so as to exclude noise components other than the reflected light L2 detected by the light detection elements DC in the cell units CU other than the selected cell units CU. The light detector PD can detect the reflected light L2 at a high S/N ratio by selectively setting an active area in this manner, thereby improving the measurement accuracy.

### <1-2-2> Operation of Signal Processing Device 34

In the first arrangement, the switch part 341 of the signal processing device 34 can switch two types of combinations of the adjacent sub-channels SCH. In the first arrangement, such two types of combinations will be referred to as input groups IG1 and IG2. The following sequentially describes the operations of the signal processing device 34 (switch part 341) at the first time and the second time respectively associated with the input groups IG1 and IG2 in the ranging operation of the distance measuring device 1.

### (First Time)

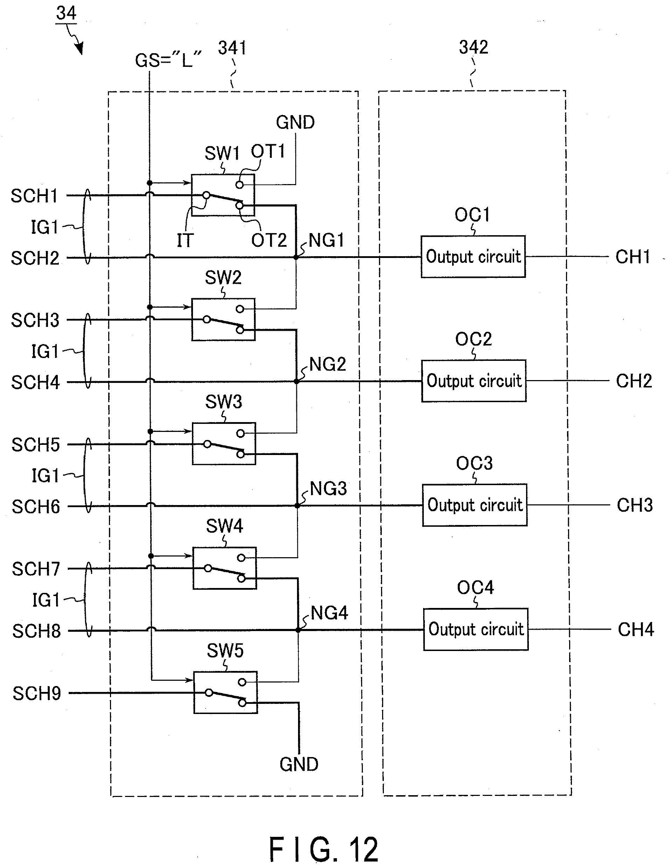

FIG. 12 depicts a schematic diagram showing an example of the operation of the signal processing device 34 at the first time in the ranging operation of the distance measuring device 1 according to the first arrangement. FIG. 12 outlines the circuit configuration of the signal processing device 34 in the case of N = 4 and the control of the control circuit 35 at the first time. As shown in FIG. 12, the control circuit 35 sets the control signal GS to "L" level at the first time. Each switch SW then electrically couples between the input end IT and the output end OT2 based on the control signal GS.

More specifically, the sub-channel SCH1 is coupled to the node NG1. The current obtained by adding output currents from the sub-channels SCH1 and SCH2 is input to the input end of the output circuit OC1. The sub-channel SCH3 is coupled to the node NG2. The current obtained by adding output currents from the sub-channels SCH3 and SCH4 is input to the input end of the output circuit OC2. The sub-channel SCH5 is coupled to the node NG3. The current obtained by adding output currents from the sub-channels SCH5 and SCH6 is input to the input end of the output circuit OC3. The sub-channel SCH7 is coupled to the node NG4. The current obtained by adding output currents from the sub-channels SCH7 and SCH8 is input to the input end of the output circuit OC4.

As described above, the signal processing device 34 according to the first arrangement inputs, to the output circuit OCk, the signal obtained by combining an output current from the sub-channel SCH(2×k-1) (1 ≤ k ≤ N) and an output current from the sub-channel SCH(2×k) in accordance with the input group IG1 at the first time. The output circuit OCk outputs, to the channel CHk, a signal based on the signal obtained by adding an output current from the sub-channel SCH(2×k-1) and an output current from the sub-channel SCH(2×k) in accordance with the first time.

### (Second Time)

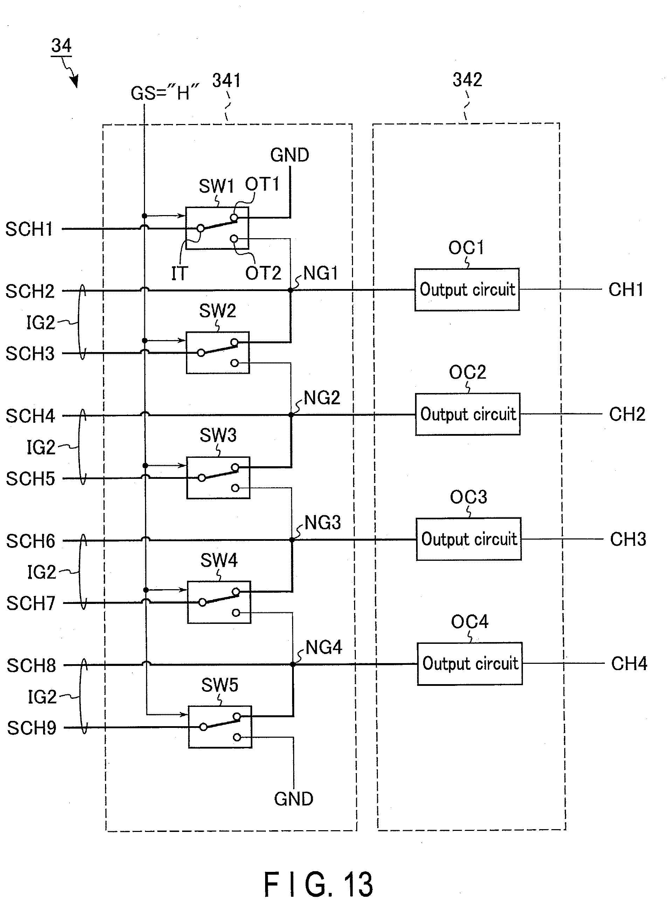

FIG. 13 depicts a schematic diagram showing an example of a method of controlling the signal processing device 34 at the second time in the ranging operation of the distance measuring device 1 according to the first arrangement. FIG. 13 outlines the circuit configuration of the signal processing device 34 in the case of N = 4 and the control of the control circuit 35 at the second time. As shown in FIG. 13, the control circuit 35 sets the control signal GS to "H" level at the second time. Each switch SW then electrically couples between the input end IT and the output end OT1 based on the control signal GS.

More specifically, the sub-channel SCH3 is coupled to the node NG1. The current obtained by adding output currents from the sub-channels SCH2 and SCH3 is input to the input end of the output circuit OC1. The sub-channel SCH5 is coupled to the node NG2. The current obtained by adding output currents from the sub-channels SCH4 and SCH5 is input to the input end of the output circuit OC2. The sub-channel SCH7 is coupled to the node NG3. The current obtained by adding output currents from the sub-channels SCH6 and SCH7 is input to the input end of the output circuit OC3. The sub-channel SCH9 is coupled to the node NG4. The current obtained by adding output currents from the sub-channels SCH8 and SCH9 is input to the input end of the output circuit OC4.

AS described above, the signal processing device 34 according to the first arrangement inputs, to the output circuit OCk, the signal obtained by combining an output current from the sub-channel SCH(2×k) (1 ≤ k ≤ N) and an output current from the sub-channel SCH(2×k+1) in accordance with the input group IG1 at the second time. The output circuit OCk then outputs, to the channel CHk, a signal based on the signal obtained by adding an output current from the sub-channel SCH(2×k) and an output current from the sub-channel SCH(2×k+1) in accordance with the second time.

### <1-2-3> Ranging Result Output Method

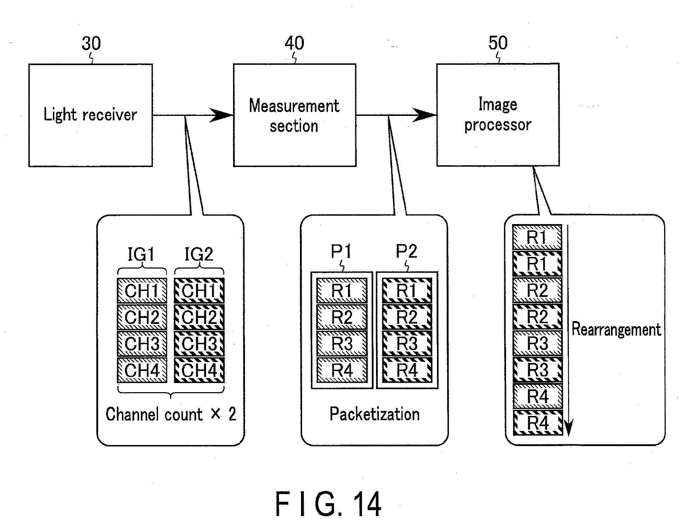

FIG. 14 depicts a schematic diagram showing an example of a ranging result output method in the ranging operation of the distance measuring device 1 according to the first arrangement. FIG. 14 shows the information transferred from the light receiver 30 to the measurement section 40, the information transferred from the measurement section 40 to the image processor 50, and part of processing by the image processor 50 in the case of channel count N = 4.

As shown in FIG. 14, the light receiver 30 sequentially transfers, to the measurement section 40, electric signals from the channels CH1 to CH4 which are generated based on the light detection result obtained by the input group IG1 and electric signals from the channels CH1 to CH4 which are generated based on the light detection result obtained by the input group IG2 in accordance with the detection area DA described with reference to FIG. 4. In other words, the light receiver 30 outputs a light detection result corresponding to the input group IG1 and a light reception result corresponding to the input group IG2 in accordance with the single detection area DA. As described above, the light receiver 30 transmits (transfers) information (electric signals) corresponding to channel count N × 2 to the measurement section 40 for each detection area DA.

The measurement section 40 then generates measurement results R1 to R4 respectively corresponding to the channels CH1 to CH4 based on the light reception result corresponding to the input group IG1 which is received from the light receiver 30. Likewise, the measurement section 40 generates the measurement results R1 to R4 respectively corresponding to the channels CH1 to CH4 based on the light reception result corresponding to the input group IG2 which is received from the light receiver 30. The measurement section 40 then packetizes the measurement results R1 to R4 corresponding to the input group IG1 and the measurement results R1 to R4 corresponding to the input group IG2. The measurement section 40 transfers, to the image processor 50, a packet P1 including the measurement results R1 to R4 corresponding to the input group IG1 and a packet P2 including the measurement results R1 to R4 corresponding to the input group IG2. In this manner, in the distance measuring device 1, data is transmitted between the measurement section 40 and the image processor 50 for each channel (for each input group IG) instead of for each frame. In addition, in the distance measuring device 1, a pair of the packets P1 and P2 is associated with each detection area DA.

The image processor 50 then generates a plurality of pixels PX associated with the detection area DA by executing rearrangement with respect to the pair of the packets P1 and P2 received from the measurement section 40. More specifically, the image processor 50 inserts data such that two data corresponding to the same channel CH are consecutively arranged. More specifically, the image processor 50 inserts the measurement result R1 of the packet P2 next to the measurement result R1 of the packet P1, inserts the measurement result R2 of the packet P1 next to the measurement result R1 of the pixel P2, inserts the measurement result R2 of the pixel P2 next to the measurement result R2 of the packet P1,..., and inserts the measurement result R4 of the packet P2 next to the measurement result R4 of the packet P1. That is, the image processor 50 alternately arranges the measurement results of the packet P1 and the measurement results of the packet P2 in the vertical direction. These measurement results alternately arranged are associated with each other such that the combinations of the measurement results corresponding to the adjacent sub-channels SCH are shifted one by one.

The image processor 50 then generates the plurality of pixels PX based on a plurality of rearranged measurement results. In the present example, the groups of the measurement results R1 to R4 of the rearranged packets P1 and P2 respectively correspond to the pixels PX1 to PX8 of the associated detection area DA. That is, the number of pixels PX arrayed in each detection area DA corresponds to channel count N × number of input groups IG. For example, if the light detector PD is constituted by 40 ch (N = 40), 40 × 2 = 80 pixels PX are arrayed along the Q-axis in correspondence with each detection area DA. In addition, if a revolving mirror having two reflecting surfaces is used, an image mapped by the scan area SA has 80 × 2 = 160 pixels PX arrayed along the Q-axis.

### <1-2-4> Correspondence between Measurement Results and Pixels PX

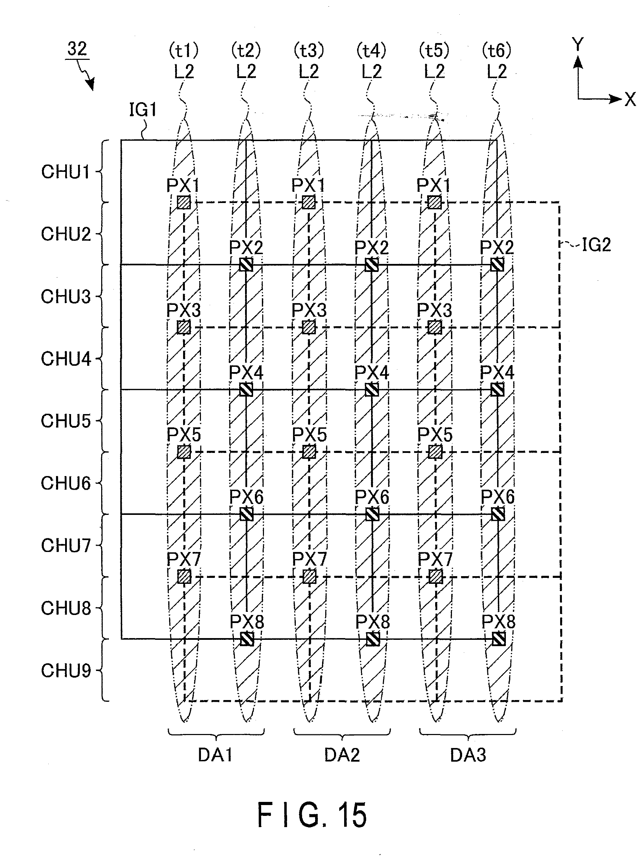

FIG. 15 depicts a schematic diagram showing an example of the correspondence between measurement results and pixels PX in the ranging operation of the distance measuring device 1 according to the first arrangement. FIG. 15 shows the centers of gravity of the measurement positions of the pixels PX corresponding to three consecutive detection areas DA1 to DA3, which are superimposed on the plan layout of the sensor array 32. Each elliptic area indicated by the oblique hatching schematically indicates an area irradiated with the reflected light L2 on the sensor array 32.

As shown in FIG. 15, the irradiation position of the reflected light L2 can change with the lapse of time. In the present example, the irradiation position of the reflected light L2 moves in the X direction. Times t1 to t6 shown in FIG. 15 each indicate the measurement timing associated with the irradiation position of the reflected light L2. In the present example, times t1, t3, and t5, that is, odd-numbered measurement times, are associated with the input group IG1. In addition, times t2, t4, and t6, that is, even-numbered measurement times, are associated with the input group IG2. Times t1 and t2 are associated with the detection area DA1. Times t3 and t4 are associated with the detection area DA2. Times t5 and t6 are associated with the detection area DA3.

The measurement position of each pixel PX is decided based on the arrangement of the cell unit CU selected at each time. In the present example, the grid indicated by the solid lines is shown in association with the pixels PX corresponding to the input group IG1, and the grid indicated by the broken lines is shown in association with the pixels PX corresponding to the input group IG2. More specifically, the odd-numbered pixels PX generated at times t1, t3, and t5 are constituted by sub-pixels corresponding to the channel units CHU(2×k-1) (1 ≤ k ≤ N) and sub-pixels corresponding to the channel units CHU(2×k). The even-numbered pixels PX generated at times t2, t4, and t6 are constituted by sub-pixels corresponding to the channel units CHU(2×k) (1 ≤ k ≤ N) and sub-pixels corresponding to the channel units CHU(2×k+1).

Accordingly, the center of gravity of each measurement position in the sets of the odd-numbered pixels PX is shifted from the center of gravity of a corresponding one of the measurement positions in the sets of the even-numbered pixels PX by, for example, one channel unit CHU (sub-pixel) in the Y direction. In other words, the center of gravity of each measurement position in the sets of the odd-numbered pixels PX is shifted from the center of gravity of a corresponding one of the measurement positions in the sets of the even-numbered pixels PX by half (half pixel) of the pixel PX in the Y direction. Each detection area DA includes the pixels PX of the input groups IG1 and IG2 measured at the positions shifted in the X direction. Note that in the example shown in FIG. 15, the area corresponding to each pixel PX is indicated by a square area. However, the present invention is not limited to this. The area corresponding to each pixel PX can change in accordance with the layout of the light detection elements DC included in the sensor array 32 and the number and positions of the selected cell units CU.

### <1-2-5> Averaging Process

In the distance measuring device 1 according to the first arrangement, the measurement section 40 executes an averaging process using an averaging algorithm based on reliability. In the averaging process, when calculating a distance value at a given measurement point (pixel PX) of a target, the measurement section 40 uses a measurement result at at least one measurement point near the given measurement point. For example, the measurement section 40 weighs the measurement result at a measurement point near a target based on the reliability and accumulates the measurement result to the measurement result at a measurement point of the target. The measurement section 40 then detects at least one peak of a signal included in the accumulated measurement result and decides a distance value at the measurement point from at least one detected peak.

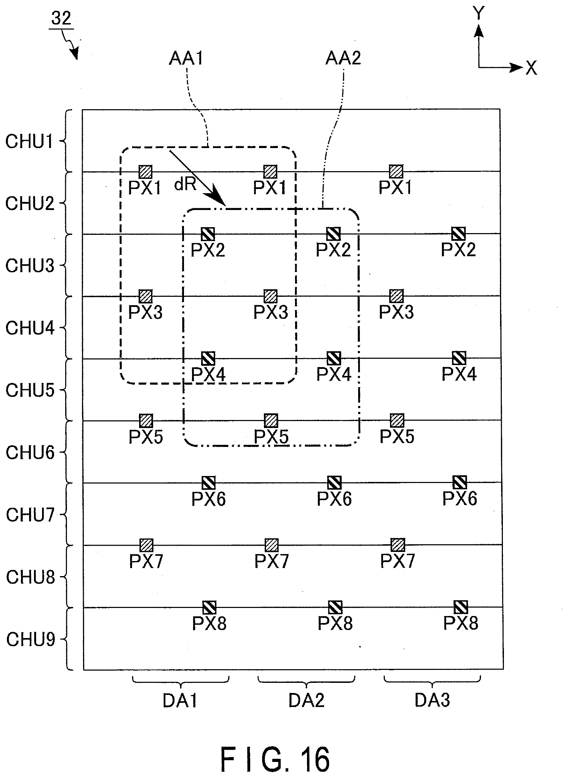

FIG. 16 depicts a schematic diagram showing an example of the setting of an averaging range in an averaging process in the distance measuring device 1 according to the first arrangement. FIG. 16 shows an example of the averaging range used in the averaging process, which is superimposed on a plan layout of the sensor array 32 like that shown in FIG. 15. This specification indicates that the averaging range is an area including the measurement point of the target described above and at least one measurement point around the target. In the present example, an area AA1 surrounded by the broken line indicates the averaging range used for the pixel PX1 in the detection area DA1. An area AA2 surrounded by the two-dot chain line indicates the averaging range used for the pixel PX2 in the detection area DA1.

As shown in FIG. 16, the pixels PX1 and PX2 in the detection area DA1 have a relationship of sharing the channel unit CHU2 as a sub-pixel. The averaging range (area AA1) of the pixel PX1 in the detection area DA1 includes the pixels PX1 and PX3 in the detection areas DA1 and DA2 and the pixels PX2 and PX4 in the detection area DA1. On the other hand, the averaging range (area AA2) of the pixel PX2 in the detection area DA1 includes the pixels PX2 and PX4 in the detection areas DA1 and DA2 and the pixels PX3 and PX5 in the detection area DA2.

Referring to FIG. 16, dR represents the displacement from the centers of gravity of the plurality of pixels PX included in the area AA1 to the centers of gravity of the plurality of pixels PX included in the area AA2. The Y-direction (column-direction) component of dR corresponds to one channel unit CHU (sub-pixel), that is, half the width of the pixel PX. The averaging ranges of the two pixels PX sharing the channel unit CHU between the input groups IG1 and IG2 have a relationship in which the positions are shifted by half the pixel PX in the Y direction. In other words, the measurement section 40 makes settings for each pair of pixels PX sharing the channel unit CHU in each detection area DA such that the pixel PX located at the position to which the pixel PX included in one averaging range (area AA1) has moved by dR is included in the other averaging range (area AA2).

As described above, the measurement section 40 according to the first arrangement switches, in one scan, between an averaging range corresponding to an odd-numbered measurement result and an averaging range corresponding to an even-numbered measurement result. The measurement section 40 then generates each pixel PX in the input group IG1 and each pixel PX in the input group IG2 by the above averaging process. As a result, the measurement section 40 can transfer, to the image processor 50, measurement results corresponding to the pixels PX equal in number to channel N × 2, that is, the number of sub-channels SCH used for the measurement of each input group IG before averaging, for each detection area DA.

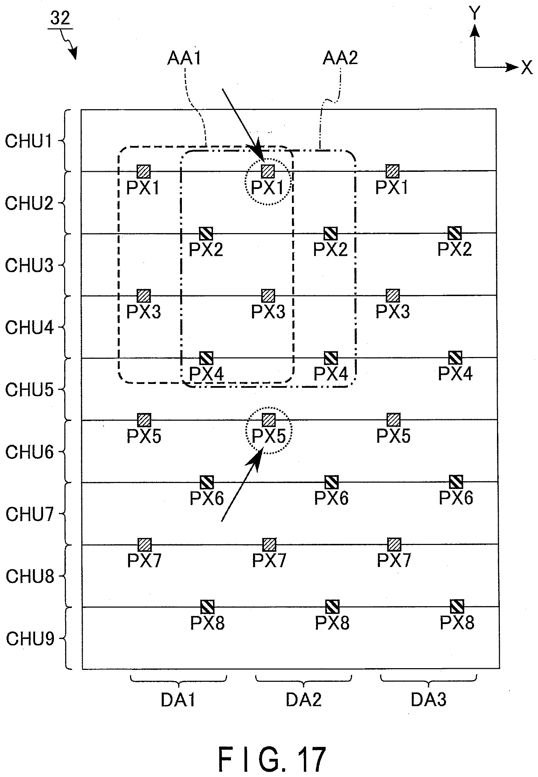

FIG. 17 depicts a schematic diagram for explaining differences in averaging process between the first arrangement and a conventional example. The differences in averaging process between the first arrangement and the conventional example will be described with reference to FIG. 17.

The number of cell units CU of the sensor array 32 according to the first arrangement is about twice that in the conventional example. On the other hand, the number of output channels according to the first arrangement is the same as that in the conventional example. For this reason, the numbers and types of signal processing circuits 41 and AD converters 42 used in the first arrangement are the same as those in the conventional example. Since the number of channels remains the same between the first arrangement and the conventional example, the first arrangement can use the same measurement circuits and averaging circuits as those used by the conventional example.

FIG. 17 shows an averaging range according to the conventional example. In this case, the pixels PX1 and PX2 are output to one channel line, and the pixels PX3 and PX4 are output to another channel line (two channel lines in total). The averaging range in the conventional example remains the same for each measurement, and processing is performed for each fixed pair of channels. If the first averaging range is the area AA1, an averaging process is executed for the two channels described above. If the next averaging range is the area AA2, an averaging process is executed for the same two channels as those for the area AA1. Accordingly, as shown in FIG. 17, the area AA2 includes, for example, six pixels from the pixels PX1 to PX4. In this case, the difference in center of gravity between the areas AA1 and AA2 in the conventional example is about 0.17 pixel, which is very small as compared with the difference (half pixel) in center of gravity in the first arrangement. This indicates that in the case of the use of an averaging process according to the conventional example, observation positions and directions based on the averaging result in the area AA1 and the averaging result in the area AA2 in the vertical direction remain almost the same. Accordingly, the resolution in the vertical direction in the first arrangement is improved more than in the averaging process according to the conventional example.

As shown in FIG. 16, according to the first measurement, in the area AA2, the pixel PX1 is excluded from the averaging range, and the pixel PX5 is added instead. That is, in the area AA2 in an averaging process according to the first arrangement, a channel signal located one channel below the area is added to the averaging range, so that the number of channels as target channels increases from 2 to 3. This implements the operation of moving the pixel position by dR. A corresponding circuit can be implemented by adding one gate (transistor) to a path through which the above channel signal is transferred to the averaging circuit and causing the gate to open or close in accordance with a control signal indicating one of the input groups IG1 and IG2.

Although FIG. 16 exemplarily shows the case in which an averaging range is set to a range corresponding to two to three pixels (that is, the four cell units CU) in the vertical direction and three pixels in the horizontal direction in the conventional example. The present invention is not limited to this. Any number of pixels can be used in both the vertical direction and the horizontal direction. Note, however, that the number of cell units CU subjected to averaging needs to be constant. That is, although the number of channels subjected to averaging increases by one in the input group IG2, the number of cell units CU to be used between the input groups IG1 and IG2 is constant.

### <1-3> Advantageous Effect of First Arrangement

According to the distance measuring device 1 according to the first arrangement described above, it is possible to suppress the manufacturing cost of the distance measuring device 1 and improve the ranging performance. The advantageous effect of the first arrangement will be described in detail below.

If the distance measuring device 1 is mounted in a vehicle, specifications required for forward monitoring place importance on the resolution in the vertical direction in particular. Methods of improving the resolution in the vertical direction may include a method of increasing the number of rows to be scanned and a method of increasing the number of pixels in the vertical direction which can be simultaneously ranged (that is, the number of pixels PX arranged in the vertical direction in correspondence with the single detection area DA). For example, increasing the number of channel units CHU of the sensor array 32 can increase the number of pixels PX in the vertical direction which can be simultaneously ranged.

A measurement IC for processing the light reception result output from the light detector includes a circuit for measuring a distance value for each channel. Since the circuit area increases with an increase in channel count, increasing the channel count becomes a factor that increases the size of the measurement IC and the manufacturing cost. That is, the number of channels of the measurement IC used in the distance measuring device 1 has its upper limit due to manufacturing cost. For this reason, considering the simultaneous pursuit of manufacturing cost reduction and performance improvement makes it also difficult to increase the number of channels of the light detector to increase the number of pixels in the vertical direction.

If the number of channels is increased, the number of wires between the light detector and the measurement IC increases. The design of the number of wires has its own limit in terms of cost and technique. For this reason, it is practically difficult to provide too many wires between the light detector and the measurement IC.

On the other hand, increasing the number of rows to be scanned makes it possible to increase the number of pixels in the vertical direction without increasing the number of channels of the measurement IC. For example, using a multifaceted polygon mirror can increase the number of rows to be scanned. However, it is more difficult to increase the surface accuracy and working accuracy of a polygon mirror than those of a revolving mirror (two-sided mirror), and the polygon mirror requires a larger installation area than the removing mirror. For this reason, in order to implement the compact, low-cost distance measuring device 1, a revolving mirror is preferably used.

As another method of increasing the number of pixels in the vertical direction, it is conceivable to selectively couple the even-numbered channel unit CHU and the odd-numbered channel unit CHU to each channel. Such a method is also called an interlace method. However, simply switching coupling between the channel units CHU will reduce the number or area of diodes APD used for the detection of light per channel. This leads to a reduction in the S/N ratio of an output current from the light detector and a reduction in detection performance. That is, this method does not use half of the light applied to the light detector PD and hence is not preferable for the distance measuring device 1 for long distance. In addition, the method may lack in dynamic range. The lack in dynamic range may become a factor that causes a ranging failure and also a factor that reduces the ranging accuracy. In addition, the method does not use half of the light applied to the light detector and hence is not preferable for the distance measuring device 1 for long distance.

In contrast to this, the distance measuring device 1 according to the first arrangement includes the signal processing device 34 that can switch signals to be input to each channel CH by using the input groups IG1 and IG2. In a ranging operation, the signal processing device 34 executes measurement of light reception results by alternately switching the input groups IG1 and IG2. That is, combinations of two consecutive sub-pixels are switched for each measurement timing and used for the calculation of distance value at each pixel PX. In addition, the measurement section 40 sets an averaging range shifted by half the pixel PX (that is, sub-pixel) in the vertical direction and executes an averaging process based on different combinations of the pixels PX between the input groups IG1 and IG2. The image processor 50 then generates the plurality of pixels PX in the detection area DA by rearranging measurement results of the set of the input groups IG1 and IG2.

This allows the distance measuring device 1 according to the first arrangement to maintain the number or area of the diodes APD used for the detection of light per channel and increase the number of pixels in the vertical direction as in the interlace method. That is, the distance measuring device 1 can use the interlace method, maintain the S/N ratio of a signal, and suppress a reduction in dynamic range. Since the switch part 341 of the signal processing device 34 is formed from a simple switching circuit, it is possible to suppress an increase in circuit area more than a case in which the number of channels of the measurement IC (measurement section 40) is increased. In addition, the distance measuring device 1 according to the first arrangement executes an averaging process described with reference to FIG. 16 and hence can also increase the effective resolution in the vertical direction. This makes it possible for the distance measuring device 1 according to the first arrangement to improve the ranging performance while suppressing the manufacturing cost of the distance measuring device 1.

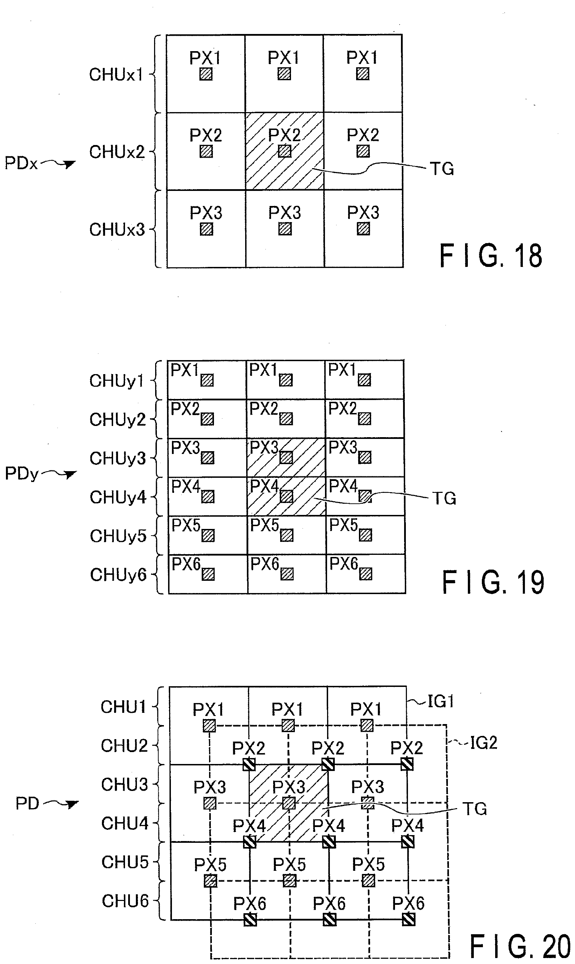

The characteristics of the distance measuring device 1 according to the first arrangement will be described below with reference to a comparative example. FIGS. 18, 19, and 20 depict schematic diagrams respectively showing evaluation conditions in the light detectors according to the first comparative example, the second comparative example, and the first arrangement. FIGS. 18, 19, and 20 each schematically show the position where the target object TG is arranged and its size on the plan layout of the pixels PX (cell units CU) used for ranging. FIGS. 18, 19, and 20 show the plurality of pixels PX in the three consecutive detection areas DA.

As shown in FIG. 18, a light detector PDx according to the first comparative example includes channel units CHUx1 to CHUx3 and a plurality of pixels PX1 to PX3 provided in correspondence with each channel unit CHUx. In the first comparative example, each channel unit CHUx is associated with one channel CH. An evaluation condition in the first comparative example is that the target object TG is arranged to overlap the pixel PX2 on a central portion of FIG. 18.

As shown in FIG. 19, a light detector PDy according to the second comparative example includes channel units CHUy1 to CHUy6 and a plurality of pixels PX1 to PX6 provided in correspondence with each channel unit CHUy. In the second comparative example, each channel unit CHUy is associated with one channel CH, and the width of each channel unit CHUy is set to half of the channel unit CHUx. An evaluation condition in the second comparative example is that the target object TG is arranged to overlap pixels PX3 and PX4 on a central portion of FIG. 19.

As shown in FIG. 20, the light detector PD according to the first arrangement includes the channel units CHU1 to CHU6 and the plurality of pixels PX1 to PX6 provided in correspondence with each channel unit CHUy. In the first arrangement, the width of each channel unit CHU in the vertical direction is set to be similar to the channel unit CHUy according to the second comparative example. An evaluation condition in the first arrangement is that the target object TG is arranged to overlap the pixel PX3 on a central portion of FIG. 20.

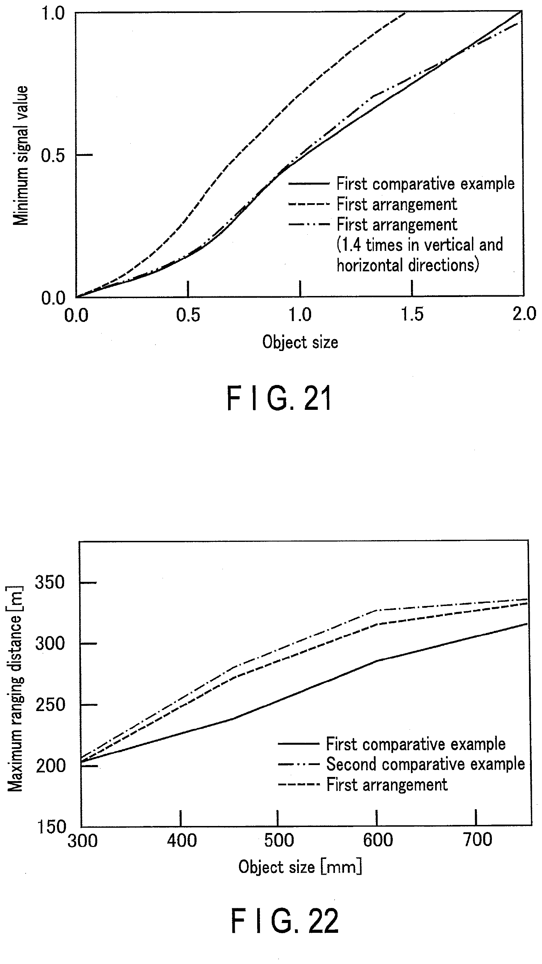

FIG. 21 depicts a graph showing an example of the ranging performance of each of the first comparative example and the first arrangement. In the graph shown in FIG. 21, the abscissa axis represents the object size (the size of the target object TG), and the ordinate axis represents the minimum signal value detected while the object position is shifted. The minimum signal value is a main factor that determines the LiDAR performance in the worst case which is most important. In this case, FIG. 21 shows results in a case in which any minimum signal value has not undergone an averaging process.

As shown in FIG. 21, in each of the first comparative example and the first arrangement, as the object size increases, the minimum signal value increases. If the first arrangement and the first comparative example are designed to have the same sensor size (the size of the cell unit CU), the minimum signal value in the first arrangement is larger than that in the first comparative example. In addition, if the vertical and horizontal size of each pixel in the light detector PD according to the first arrangement is multiplied by 1.4 in the same sensor array 32, the minimum signal values in the first arrangement and the first comparative example almost match each other. In contrast to this, this indicates that if the vertical and horizontal sizes of each pixel in the light detector PD according to the first arrangement remain the same (1× in the vertical and horizontal directions) and the vertical and horizontal sizes of each pixel in the first comparative example is multiplied by 1/1.4 (the resolution is multiplied by 1.4 in the vertical and horizontal directions), the minimum signal values in the first arrangement and the first comparative example match each other.

That is, this indicates that the interlace method according to the first arrangement has improved the effective vertical resolution by about 1.4 times as compared with the first comparative example. The interlace method obtains one measurement result by two times of laser emission including one emission for each of the input groups IG1 and IG2. Accordingly, in the interlace method, the horizontal resolution becomes 0.5 times. In summary, the resolution in the horizontal direction becomes 0.5 times × 1.4 times to 1/1.4, and the number of pixels in the horizontal direction decreases. In contrast to this, the specification associated with the number of pixels in the horizontal direction in LiDAR is less strict than the specification associated with the number of pixels in the vertical direction. That is, even if the interlace method is used and the number of pixels in the horizontal direction decreases, LiDAR can satisfy required specifications. Accordingly, if the distance measuring device 1 according to the first arrangement is used in a vehicle with priority placed on the resolution in the vertical direction, the device can satisfy both the specifications in the vertical and horizonal directions.

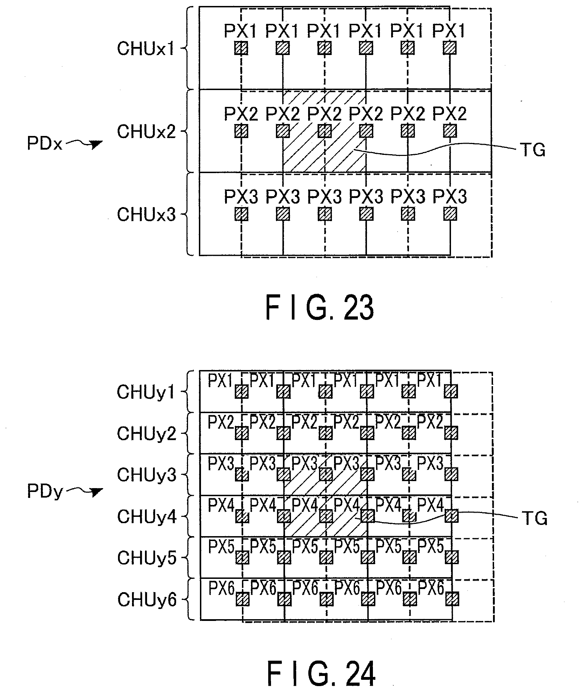

FIG. 22 depicts a graph showing the evaluation results obtained in the first comparative example, the second comparative example, and the first arrangement. Referring to the graph shown in FIG. 22, the abscissa axis represents the object size (the size of the target object TG) [mm], and the ordinate axis represents the maximum ranging distance [m]. Each evaluation result indicates the maximum ranging distance in a case in which laser is emitted with the same frequency to execute an equal number of averaging processes. In this evaluation, since the numbers of times of emission of laser (that is, the numbers of times of measurement) are matched with each other, the number of times of measurement in each of the first and second comparative examples is set to be twice that in the first arrangement. In consideration of this point, as shown in FIG. 23, the schematic diagram of the first comparative example corresponds to a state in which each pixel is divided into halves in the horizontal direction as compared with FIG. 18. Likewise, as shown in FIG. 24, the schematic diagram of the second comparative example corresponds to a state in which each pixel is divided into halves in the horizontal direction as compared with FIG. 19. Note that the first comparative example and the first arrangement can use the identical signal processing circuit 41 and the identical AD converter 42 including the number of channels.

As shown in FIG. 22, in each of the first comparative example, the second comparative example, and the first arrangement, as the object size increases, the maximum ranging distance increases. In addition, since the number of pixels in the vertical direction in the first comparative example is smaller than that in the second comparative example, the maximum ranging distance decreases in the case of object sizes of 300 to 700 [mm]. That is, the first arrangement is better than the first comparative example. On the other hand, as shown in FIG. 22, the first arrangement has a similar number of pixels in the vertical direction to the number of pixels in the second comparative example and implements the maximum ranging distance similar to that in the second comparative example. The first arrangement is better than the first comparative example and implements the maximum ranging distance similar to that in the second comparative example. That is, the distance measuring device 1 according to the first arrangement apparently doubles the number of pixels in the vertical direction and improves the effective resolution by 1.4 times, thereby implementing performance similar to that in the case in which the number of channels is doubled.

### <2> Second Arrangement

A distance measuring device 1 according to the second arrangement includes a light detector PDa that can switch between combinations of three consecutive sub-channels SCH associated with three consecutive channels CH. The distance measuring device 1 according to the second arrangement will be described in detail below.

### <2-1> Configuration

### <2-1-1> Configuration of Light Detector PDa

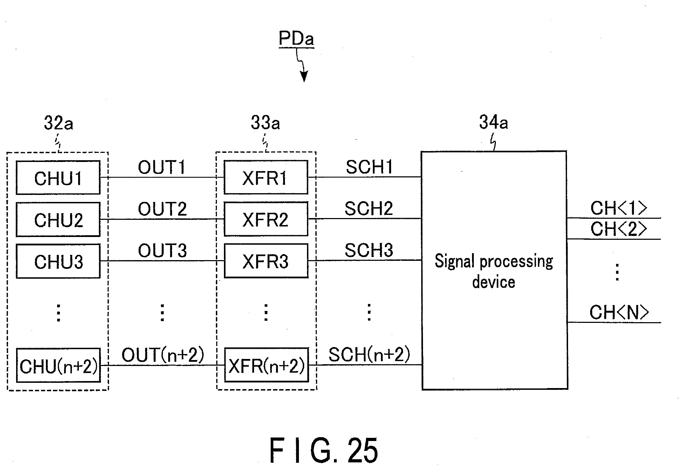

FIG. 25 depicts a block diagram showing an example of the configuration of the light detector PDa included in the distance measuring device 1 according to the second arrangement. As shown in FIG. 25, the light detector PDa includes a sensor array 32a, a column selector 33a, and a signal processing device 34a. The sensor array 32a includes a plurality of channel units (groups) CHU1 to CHU(n+2) (n is an integer of three or more). The column selector 33a includes a plurality of selection-and-adder circuits XFR1 to XFR(n+2).

The plurality of channel units CHU1 to CHU(n+2) of the sensor array 32a are respectively coupled to a plurality of selection-and-adder circuits XFR1 to XFR(n+2) via output node sets OUT1 to OUT(n+2). The plurality of selection-and-adder circuits XFR1 to XFR(n+2) of the column selector 33a are coupled to the signal processing device 34a via sub-channels SCH1 to SCH(n+2), respectively. This allows each selection-and-adder circuit XFR according to the second arrangement to transfer electric signals output from active SPADs included in the associated channel unit CHU to the signal processing device 34a.

The signal processing device 34a addes signals from the three consecutive sub-channels SCH and outputs the resultant signal to the corresponding channel CH. In the second arrangement, the electric signals transferred from the three consecutive sub-pixels (channel units CHU) are used to generate distance data corresponding to one pixel PX. The signal processing device 34a will be described in detail later.

In the light detector PDa according to the second arrangement, the number of channel units CHU and the number of selection-and-adder circuits XFR are designed based on a channel count N. In the second arrangement, N = n/3. More specifically, in the case of channel count N = 80 (that is, a light detector PD having 80-channel outputs), the column selector 33a is coupled to the signal processing device 34a via 242 sub-channels SCH.

For the sake of simplicity, the following will describe a case in which N = 4, that is, n = 12, and the light detector PD includes four channels CH1 to CH4, the 14 sub-channels SCH1 to SCH4, the 14 selection-and-adder circuits XFR1 to XFR14, the 14 output node sets OUT1 to OUT14, and the 14 channel units CHU1 to CHU14.

### <2-1-2> Circuit Configuration of Signal Processing Device 34a

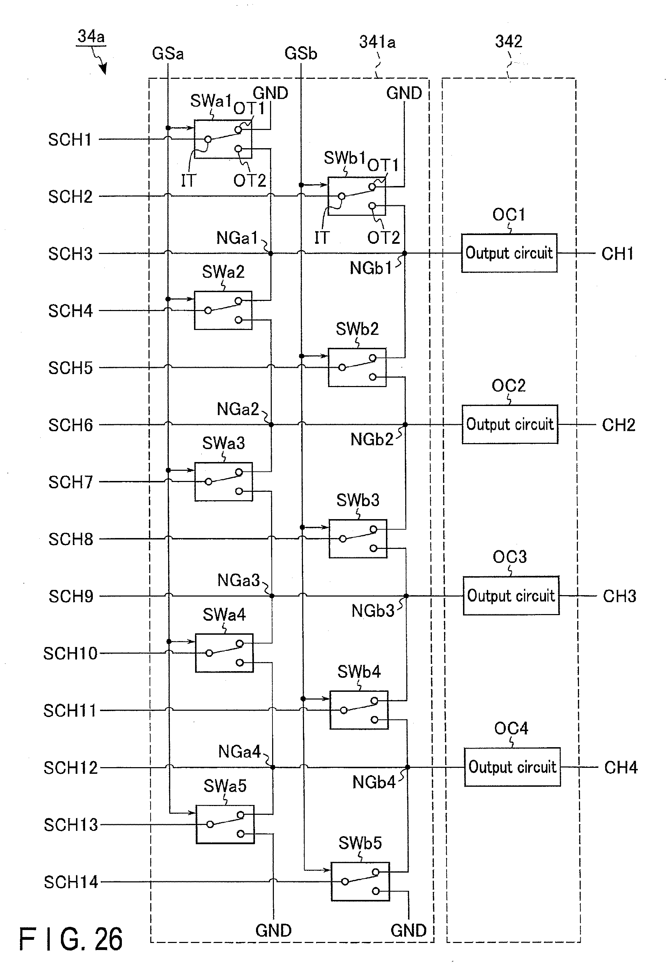

FIG. 26 depicts a circuit diagram showing an example of the circuit configuration of the signal processing device 34a included in the light detector PDa included in the distance measuring device 1 according to the second arrangement. As shown in FIG. 8, the signal processing device 34a includes a switch part 341a and an output part 342. The switch part 341a is a circuit that switches the combinations of the plurality of sub-channels SCH. In the case of N = 4, the switch part 341a includes a plurality of switches SWa1 to SWa5 and a plurality of switches SWb1 and SWb5. The output part 342 is a circuit that, for example, amplifies a plurality of signals input via the switch part 341 and respectively outputs the amplified signals to the plurality of channels CH. In the case of L = 4, the output part 342 includes a plurality of output circuits OC1 to OC4.

Each of the switches SWa and SWb is a three-way switch and has an input end IT and output ends OT1 and OT2. Each switch SWa electrically couples between the input end IT and the output end OT1 or between the input end IT and the output end OT2 based on a control signal GSa. Each switch SWb electrically couples between the input end IT and the output end OT1 or between the input end IT and the output end OT2 based on a control signal GSb. The control signal GSa and GSb are signals generated by the control circuit 35.

The input end IT of the switch SWa1 is coupled to the sub-channel SCH1. The output ends OT1 and OT2 of the switch SWa1 are respectively coupled to a ground node GND and a node NGa1. The input end IT of the switch SWb1 is coupled to the sub-channel SCH2. The output ends OT1 and OT2 of the switch SWb1 are respectively coupled to the ground node GND and the node NGb1. The nodes NGa1 and NGb1 (to be also referred to as nodes NG1 hereinafter) are respectively coupled to the sub-channel SCH3 and the input end of the output circuit OC1.

The input end IT of the switch SWa2 is coupled to the sub-channel SCH4. The output ends OT1 and OT2 of the switch SWa2 are respectively coupled to the node NGa1 and a node NGa2. The input end IT of the switch SWb2 is coupled to the sub-channel SCH5. The output ends OT1 and OT2 of the switch SWb2 are respectively coupled to the node NGb1 and a node NGb2. The nodes NGa2 and NGb2 (to be also referred to as nodes NG2 hereinafter) are respectively coupled to the sub-channel SCH6 and the input end of the output circuit OC2.

The input end IT of the switch SWa3 is coupled to the sub-channel SCH7. The output ends OT1 and OT2 of the switch SWa3 are respectively coupled to the node NGa2 and a node NGa3. The input end IT of the switch SWb3 is coupled to the sub-channel SCH8. The output ends OT1 and OT2 of the switch SWb3 are respectively coupled to the node NGb2 and a node NGb3. The nodes NGa3 and NGb3 (to be also referred to as nodes NG3 hereinafter) are respectively coupled to the sub-channel SCH9 and an output circuit OC3.

The input end IT of the switch SWa4 is coupled to the sub-channel SCH10. The output ends OT1 and OT2 of the switch SWa4 are respectively coupled to the node NGa3 and a node NGa4. The input end IT of the switch SWb4 is coupled to the sub-channel SCH11. The output ends OT1 and OT2 of the switch SWb4 are respectively coupled to the node NGb3 and a node NGb4. The nodes NGa4 and NGb4 (to be also referred to as nodes NG4 hereinafter) are respectively coupled to the sub-channel SCH12 and the input end of an output circuit OC4.

The input end IT of the switch SWa5 is coupled to the sub-channel SCH13. The output ends OT1 and OT2 of the switch SWa5 are respectively coupled to a node NGa4 and the ground node GND. The input end IT of the switch SWb5 is coupled to the sub-channel SCH14. The output ends OT1 and OT2 of the switch SWb5 are respectively coupled to the node NGb4 and the ground node GND.

That is, in the switch part 341a, a switch SWak' (2 ≤ k' ≤ N + 1) is configured such that the input end IT is coupled to a sub-channel SCH(3×k'-2), the output end OT1 is coupled to a node NG(k'-1), and the output end OT2 is coupled to a node NGk'. In the switch part 341a, a switch SWbk' is configured such that the input end IT is coupled to a sub-channel SCH(3×k'-1), the output end OT1 is coupled to the node NG(k'-1), and the output end OT2 is coupled to the node NGk'. In the switch part 341a, the output ends OT1 of the switches SWa and SWb (the switches SWa1 and SWb1) assigned to one end portion and the output ends OT2 of the switches SWa and SWb (for example, the switches SWa5 and SWb5) assigned to the other end portion are, for example, grounded.

The remaining configurations of the distance measuring device 1 according to the second arrangement are the same as those of the first arrangement.

### <2-2> Operation of Signal Processing Device 34a

In the second arrangement, the switch part 341a of the signal processing device 34a forms three types of combinations of adjacent sub-channels SCH. In the second arrangement, these three types of combinations are respectively called input groups IG1 to IG3. The following sequentially describes the operations of the signal processing device 34a (switch part 341a) at the first time to the third time respectively associated with the input groups IG1, IG2, and IG3 in the ranging operation of the distance measuring device 1.

### (First Time)

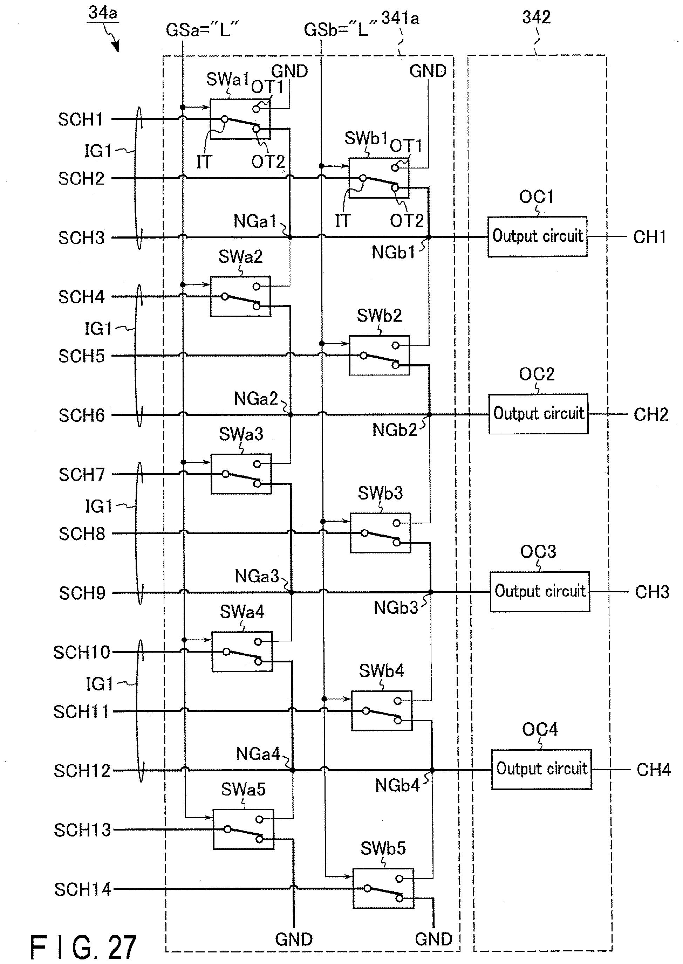

FIG. 27 depicts a schematic diagram showing an example of the operation of the signal processing device at the first time in the ranging operation of the distance measuring device according to the second arrangement. FIG. 27 outlines the circuit configuration of the signal processing device 34a in the case of N = 4 and the control of the control circuit 35 at the first time. As shown in FIG. 27, the control circuit 35 according to the second arrangement sets each of control signals GSa and GSb to "L" level at the first time. Each switch SWa then electrically couples between the input end IT and the output end OT2 based on the control signal GSa. Each switch SWb couples between the input end IT and the output end OT2 based on the control signal GSb.

More specifically, the sub-channels SCH1 and SCH2 are coupled to nodes NG1 (NGa1 and NGb1). The current obtained by adding output currents from the sub-channels SCH1 to SCH3 is input to the input end of the output circuit OC1. The sub-channels SCH4 and SCH5 are coupled to nodes NG2 (NGa2 and NGb2). The current obtained by adding output currents from the sub-channels SCH4 to SCH6 is input to the input end of the output circuit OC2. The sub-channels SCH7 and SCH8 are coupled to nodes NG3 (NGa3 and NGb3). The current obtained by adding output currents from the sub-channels SCH7 to SCH9 is input to the input end of the output circuit OC3. The sub-channels SCH10 and SCH11 are coupled to nodes NG4 (NGa4 and NGb4). The current obtained by adding output currents from the sub-channels SCH10 to SCH12 is input to the input end of the output circuit OC4.

Note that in the second arrangement, at the first time, the switch SWa5 couples between the sub-channel SCH13 and the ground node GND, and the switch SWb5 couples between the sub-channel SCH14 and the ground node GND. Accordingly, the channel unit CHU13 corresponding to the sub-channel SCH13 and the channel unit CHU14 corresponding to the sub-channel SCH14 are not used for the detection of light at the first time.

As described above, the signal processing device 34a according to the second arrangement inputs, to the output circuit OCk, the signal obtained by combining an output current from the sub-channel SCH(3×k-2) (1 ≤ k ≤ N), an output current from the sub-channel SCH(3×k-1), and an output current from the sub-channel SCH(3×k) in accordance with the input group IG1 at the first time. The output circuit OCk outputs, to the channel CHk, a signal based on the signal obtained by adding an output current from the sub-channel SCH(3×k-2), an output current from the sub-channel SCH(3×k-1), and an output current from the sub-channel SCH(3×k) in accordance with the first time.

### (Second Time)

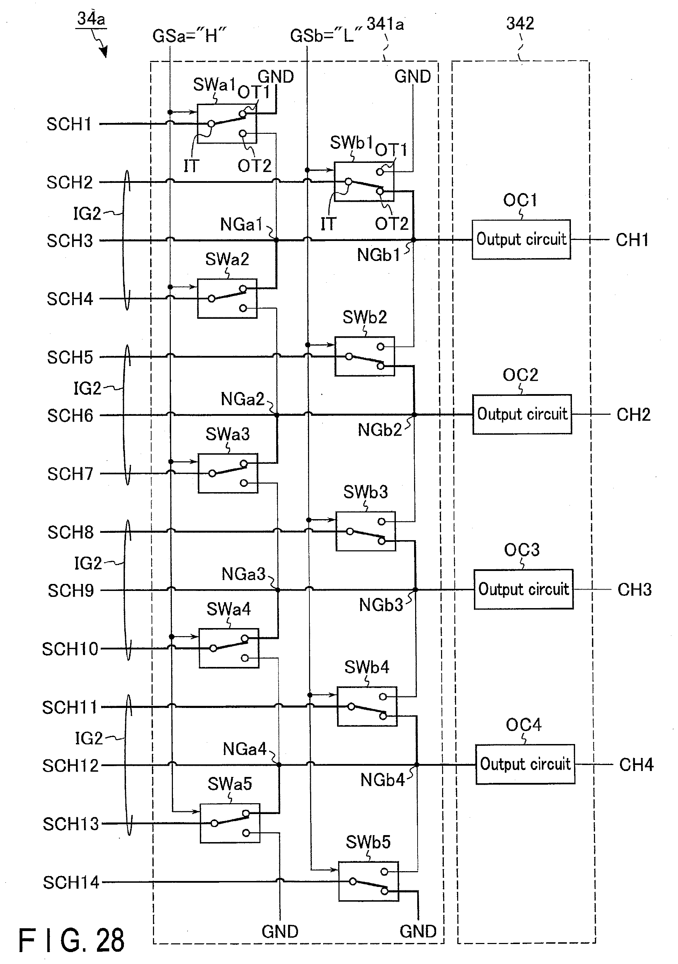

FIG. 28 depicts a schematic diagram showing an example of the operation of the signal processing device at the second time in the ranging operation of the distance measuring device according to the second arrangement. FIG. 28 outlines the circuit configuration of the signal processing device 34a in the case of N = 4 and the control of the control circuit 35 at the first time. As shown in FIG. 28, the control circuit 35 according to the second arrangement respectively sets the control signals GSa and GSb to "H" level and "L" level at the second time. Each switch SWa then electrically couples between the input end IT and the output end OT1 based on the control signal GSa. Each switch SWb couples between the input end IT and the output end OT2 based on the control signal GSb.

More specifically, the sub-channels SCH2 and SCH4 are coupled to nodes NG1 (NGa1 and NGb1). The current obtained by adding output currents from the sub-channels SCH2 to SCH4 is input to the input end of the output circuit OC1. The sub-channels SCH5 and SCH7 are coupled to nodes NG2 (NGa2 and NGb2). The current obtained by adding output currents from the sub-channels SCH5 to SCH7 is input to the input end of the output circuit OC2. The sub-channels SCH8 and SCH10 are coupled to nodes NG3 (NGa3 and NGb3). The current obtained by adding output currents from the sub-channels SCH8 to SCH10 is input to the input end of the output circuit OC3. The sub-channels SCH11 and SCH13 are coupled to nodes NG4 (NGa4 and NGb4). The current obtained by adding output currents from the sub-channels SCH11 to SCH13 is input to the input end of the output circuit OC4.

Note that in the second arrangement, at the second time, the switch SWa1 couples between the sub-channel SCH1 and the ground node GND, and the switch SWb5 couples between the sub-channel SCH14 and the ground node GND. Accordingly, the channel unit CHU1 corresponding to the sub-channel SCH1 and the channel unit CHU14 corresponding to the sub-channel SCH14 are not used for the detection of light at the second time.

As described above, the signal processing device 34a according to the second arrangement inputs, to the output circuit OCk, the signal obtained by combining an output current from the sub-channel SCH(3×k-1) (1 ≤ k ≤ N), an output current from the sub-channel SCH(3×k), and an output current from the sub-channel SCH(3×k+1) in accordance with the input group IG2 at the second time. The output circuit OCk outputs, to the channel CHk, a signal based on the signal obtained by adding an output current from the sub-channel SCH(3×k-1), an output current from the sub-channel SCH(3×k), and an output current from the sub-channel SCH(3×k+1) in accordance with the second time.

### (Third Time)

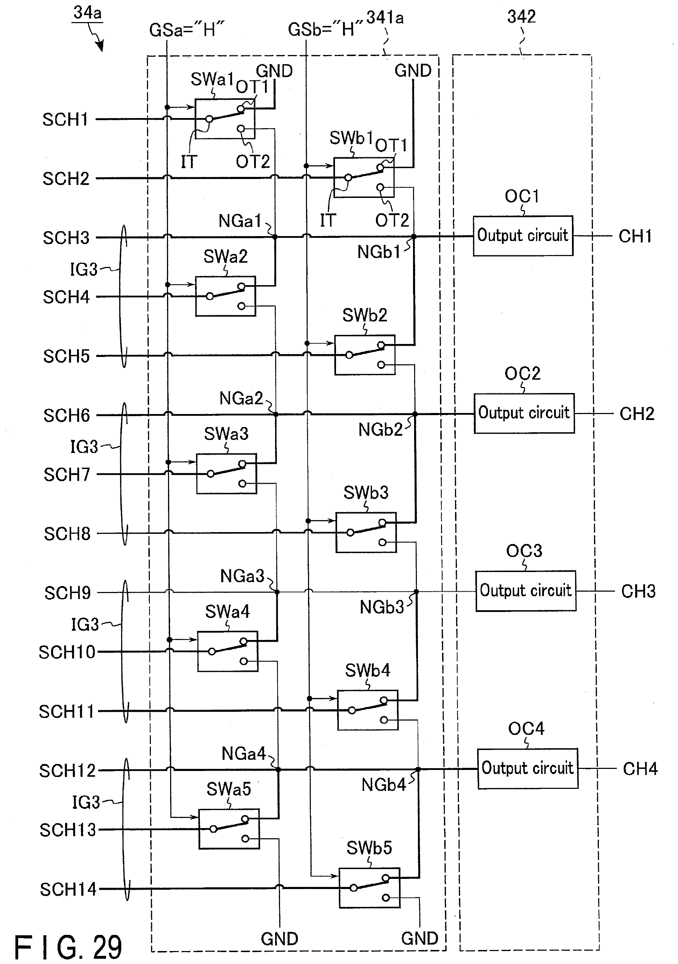

FIG. 29 depicts a schematic diagram showing an example of the operation of the signal processing device at the third time in the ranging operation of the distance measuring device according to the second arrangement. FIG. 29 outlines the circuit configuration of the signal processing device 34a in the case of N = 4 and the control of the control circuit 35 at the third time. As shown in FIG. 29, the control circuit 35 according to the second arrangement sets each of the control signals GSa and GSb to "H" level at the third time. Each switch SWa then electrically couples between the input end IT and the output end OT1 based on the control signal GSa. Each switch SWb couples between the input end IT and the output end OT1 based on the control signal GSb.

More specifically, the sub-channels SCH4 and SCH5 are coupled to nodes NG1 (NGa1 and NGb1). The current obtained by adding output currents from the sub-channels SCH3 to SCH5 is input to the input end of the output circuit OC1. The sub-channels SCH7 and SCH8 are coupled to nodes NG2 (NGa2 and NGb2). The current obtained by adding output currents from the sub-channels SCH6 to SCH8 is input to the input end of the output circuit OC2. The sub-channels SCH10 and SCH11 are coupled to nodes NG3 (NGa3 and NGb3). The current obtained by adding output currents from the sub-channels SCH9 to SCH11 is input to the input end of the output circuit OC3. The sub-channels SCH13 and SCH14 are coupled to nodes NG4 (NGa4 and NGb4). The current obtained by adding output currents from the sub-channels SCH12 to SCH14 is input to the input end of the output circuit OC4.

Note that in the second arrangement, at the third time, the switch SWa1 couples between the sub-channel SCH1 and the ground node GND, and the switch SWb1 couples between the sub-channel SCH2 and the ground node GND. Accordingly, the channel unit CHU1 corresponding to the sub-channel SCH1 and the channel unit CHU2 corresponding to the sub-channel SCH2 are not used for the detection of light at the third time.

As described above, the signal processing device 34a according to the second arrangement inputs, to the output circuit OCk, the signal obtained by combining an output current from the sub-channel SCH(3×k) (1 ≤ k ≤ N), an output current from the sub-channel SCH(3×k+1), and an output current from the sub-channel SCH(3×k+2) in accordance with the input group IG3 at the third time. The output circuit OCk outputs, to the channel CHk, a signal based on the signal obtained by adding an output current from the sub-channel SCH(3×k), an output current from the sub-channel SCH(3×k+1), and an output current from the sub-channel SCH(3×k+2) in accordance with the third time.

### <2-3> Ranging Result Output Method

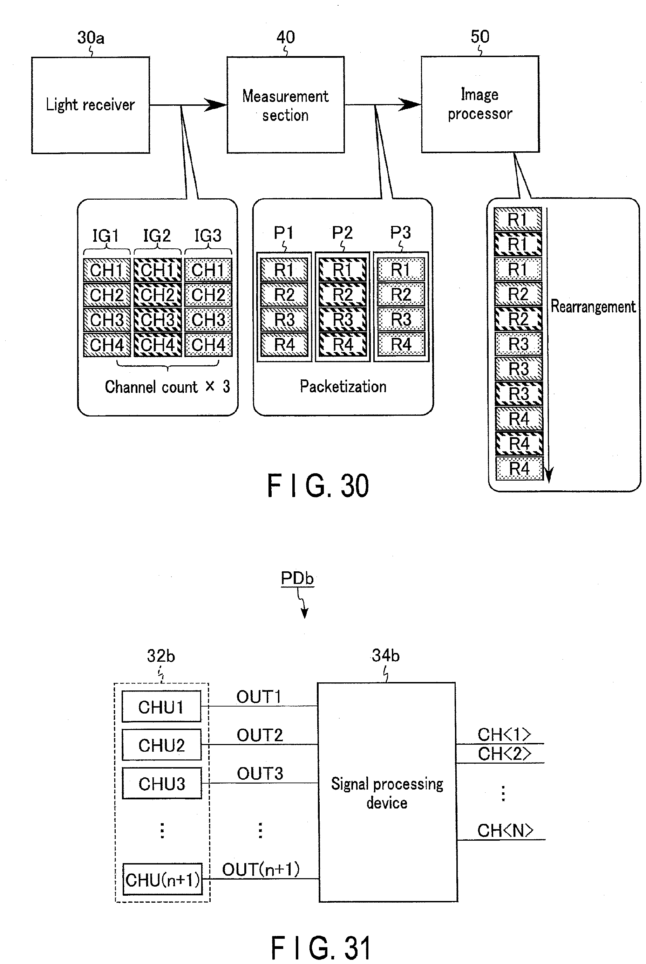

FIG. 30 depicts a schematic diagram showing an example of a ranging result output method in the ranging operation of the distance measuring device 1 according to the second arrangement. FIG. 30 shows the information transferred from a light receiver 30a having the light detector PDa to a measurement section 40, the information transferred from the measurement section 40 to an image processor 50, and part of processing by the image processor 50 in the case of channel count N = 4.

As shown in FIG. 30, the light receiver 30a sequentially transfers, to the measurement section 40, electric signals from the channels CH1 to CH4 which are generated based on the light detection result obtained by the input group IG1, electric signals from the channels CH1 to CH4 which are generated based on the light detection result obtained by the input group IG2, and electric signals from the channels CH1 to CH4 which are generated based on the light detection result obtained by the input group IG3 in accordance with a detection area DA described with reference to FIG. 4. In other words, the light receiver 30a outputs a light detection result corresponding to the input group IG1, a light reception result corresponding to the input group IG2, and a light reception result corresponding to the input group IG3 in accordance with the single detection area DA. As described above, the light receiver 30a transmits (transfers) information (electric signals) corresponding to channel count N × 3 to the measurement section 40 for each detection area DA.

The measurement section 40 then generates measurement results R1 to R4 respectively corresponding to the channels CH1 to CH4 based on the light reception result corresponding to the input group IG1 which is received from the light receiver 30a. Likewise, the measurement section 40 generates the measurement results R1 to R4 respectively corresponding to the channels CH1 to CH4 based on the light reception result corresponding to the input group IG2 which is received from the light receiver 30. The measurement section 40 generates the measurement results R1 to R4 respectively corresponding to the channels CH1 to CH4 based on the light reception result corresponding to the input group IG3 which is received from the light receiver 30. The measurement section 40 then packetizes the measurement results R1 to R4 corresponding to the input group IG1, the measurement results R1 to R4 corresponding to the input group IG2, and the measurement results R1 to R4 corresponding to the input group IG3. The measurement section 40 transfers, to the image processor 50, a packet P1 including the measurement results R1 to R4 corresponding to the input group IG1, a packet P2 including the measurement results R1 to R4 corresponding to the input group IG3, and a packet P3 including the measurement results R1 to R4 corresponding to the input group IG3. In the distance measuring device 1 according to the second arrangement, a set of the packets P1 to P3 is associated with each detection area DA.

The image processor 50 then generates a plurality of pixels PX associated with the detection area DA by executing rearrangement with respect to the set of the packets P1 to P3 received from the measurement section 40. More specifically, the image processor 50 inserts data such that three data corresponding to the same channel CH are consecutively arranged. More specifically, the image processor 50 inserts the measurement result R1 of the packet P2 next to the measurement result R1 of the packet P1, inserts the measurement result R1 of the packet P3 next to the measurement result R1 of the pixel P2, inserts the measurement result R2 of the pixel P1 next to the measurement result R1 of the packet P3,..., and inserts the measurement result R4 of the packet P3 next to the measurement result R4 of the packet P2. That is, the image processor 50 rearranges the measurement results of the packet P1, the measurement results of the packet P2, and the measurement results of the packet P3 such that the measurement results of the packets P1 to P3 are arranged side by side. These rearranged measurement results are associated with each other such that the combinations of the measurement results corresponding to the adjacent sub-channels SCH are shifted one by one.

The image processor 50 according to the second arrangement then generates a plurality of pixel PX based on a plurality of rearranged measurement results. In the present example, the groups of the measurement results R1 to R4 of the rearranged packets P1 to P3 respectively correspond to pixels PX1 to PX12 of the associated detection area DA. That is, the number of pixels PX arrayed in each detection area DA corresponds to channel count N × number of input groups IG. For example, in the second arrangement, if the light detector PD is constituted by 40 ch (N = 40), 40 × 3 = 120 pixels PX are arrayed along the Q-axis in correspondence with each detection area DA. In addition, if a revolving mirror having two reflecting surfaces is used, an image mapped by a scan area SA has 120 × 2 = 240 pixels PX arrayed along the Q-axis.

The other operations of the distance measuring device 1 according to the second arrangement are the same as those of the first arrangement.

### <2-4> Advantageous Effect of Second Arrangement

The distance measuring device 1 according to the second arrangement can apparently increase the number of pixels in the vertical direction by three times. The distance measuring device 1 according to the second arrangement can improve the effective resolution without increasing the channel count by using an averaging process similar to that in the first arrangement. According to the distance measuring device 1 according to the second arrangement described above, it is possible to suppress the manufacturing cost of the distance measuring device 1 and improve the performance.

### <3> Third Arrangement

A distance measuring device 1 according to the third arrangement includes a light detector PDb having a signal processing device 34 obtained by adding the functions of a switch part 341 and a column selector 33. The distance measuring device 1 according to the third arrangement will be described in detail below.

### <3-1> Configuration

### <3-1-1> Configuration of Light Detector PDb

FIG. 23 depicts a block diagram showing an example of the configuration of the light detector PDb included in the distance measuring device 1 according to the third arrangement. As shown in FIG. 23, the light detector PDb includes a sensor array 32b and a signal processing device 34b. The sensor array 32b includes a plurality of channel units (groups) CHU1 to CHU(n+1) (n is an integer of two or more).

The plurality of channel units CHU1 to CHU(n+1) of the sensor array 32b are coupled to the signal processing device 34b via output node sets OUT1 to OUT(n+1), respectively. The signal processing device 34b has a function similar to that of a combination of the column selector 33 and the signal processing device 34 described in the first arrangement. That is, under the control of the control circuit 35, the signal processing device 34b selectively activates a plurality of SPADs included in each channel unit CHU. A signal processing device 34a addes signals output from the active output nodes of three consecutive output node sets OUT and outputs the resultant signal to a corresponding channel CH. In the third arrangement, as in the first arrangement, the electric signals transferred from the two adjacent sub-pixels (channel units CHU) are used to generate distance data corresponding to one pixel PX. The signal processing device 34b will be described in detail later.

In the light detector PDb according to the third arrangement, the number of channel units CHU is designed based on a channel count N. In the third arrangement, as in the first arrangement, N = n/2. For the sake of simplicity, the following will describe a case in which N = 4, that is, n = 8, and the light detector PD includes four channels CH1 to CH4, the nine sub-channels SCH1 to SCH9, the nine output node sets OUT1 to OUT9, and the nine channel units CHU1 to CHU9.

### <3-1-2> Circuit Configuration of Signal Processing Device 34b

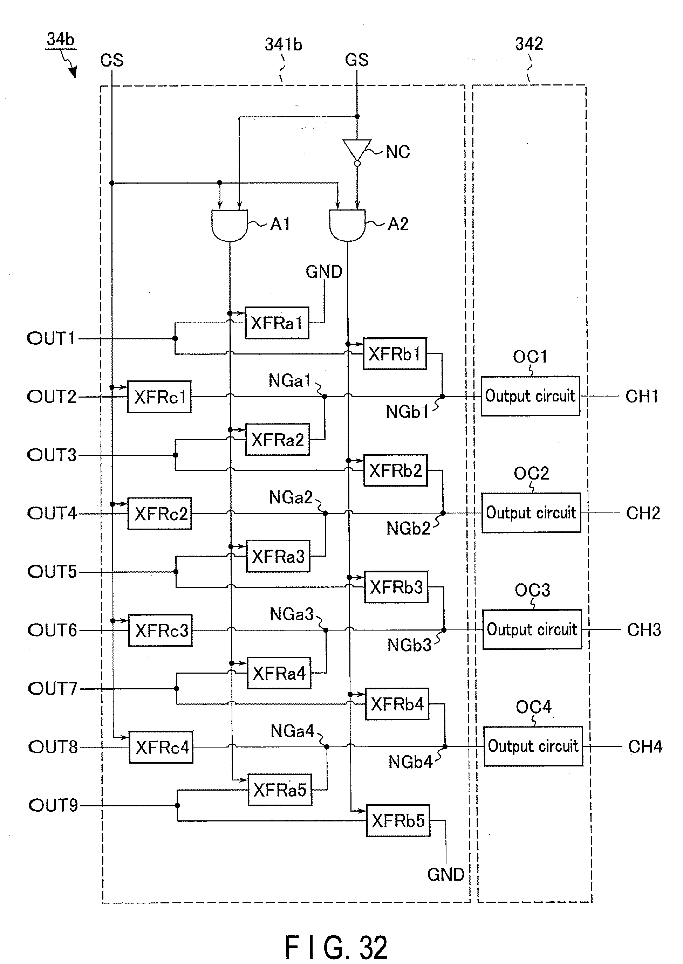

FIG. 32 depicts a circuit diagram showing an example of the circuit configuration of the signal processing device 34b included in the light detector PDb included in the distance measuring device 1 according to the third arrangement. As shown in FIG. 32, the signal processing device 34b includes a switch part 341b and an output part 342. The switch part 341b is a circuit that switches the combinations of the plurality of output node sets OUT. In the case of N = 4, the switch part 341b includes a plurality of selection-and-adder circuits XFRa1 to XFRa5, a plurality of selection-and-adder circuits XFRb1 to XFRb5, a plurality of selection-and-adder circuits XFRc1 to XFRc4, AND circuit sets A1 and A2, and NOT circuits NC. In the case of N = 4, the output part 342 includes the plurality of output circuits OC1 to OC4.

The functions and configurations of the selection-and-adder circuits XFRa, XFRb, and XFRc each are similar to the selection-and-adder circuit XFR described in the first arrangement. The function and configuration of the output circuit OC are similar to those of the output circuit OC described in the first arrangement. In the following description, coupling the output node sets OUTi (1 ≤ i ≤ (n + 1)) to the input end of the selection-and-adder circuit XFR is equivalent to coupling the output nodes of a plurality of cell units CU1 to CUm included in the channel unit CHUi to the first ends of a plurality of transistors T1 to Tm included in the selection-and-adder circuit XFR. Coupling the output end of the selection-and-adder circuit XFR to a predetermined node is equivalent to coupling the second ends of the plurality of transistors T1 to Tm included in the selection-and-adder circuit XFR to the predetermined node.

The input end and output end of the selection-and-adder circuit XFRa1 are respectively coupled to the output node set OUT1 and the ground node GND. The input end and output end of the selection-and-adder circuit XFRb1 are respectively coupled to an output node set OUT1 and a node NGb1. The input end and output end of the selection-and-adder circuit XFRc1 are respectively coupled to an output node set OUT2 and a node NGa1. The nodes NGa1 and NGb1 are coupled to the input end of an output circuit OC1. The output end of the output circuit OC1 is coupled to the channel CH1.

The input end and output end of the selection-and-adder circuit XFRa2 are respectively coupled to the output node set OUT3 and the node NGa1. The input end and output end of the selection-and-adder circuit XFRb2 are respectively coupled to the output node set OUT3 and the node NGa2. The input end and output end of the selection-and-adder circuit XFRc2 are respectively coupled to the output node set OUT4 and the node NGa2. The nodes NGa2 and NGb2 are coupled to the input end of the output circuit OC2. The output end of the output circuit OC2 is coupled to the channel CH2.

The input end and output end of the selection-and-adder circuit XFRa3 are respectively coupled to the output node set OUT5 and the node NGa2. The input end and output end of the selection-and-adder circuit XFRb3 are respectively coupled to the output node set OUT5 and the node NGa3. The input end and output end of the selection-and-adder circuit XFRc3 are respectively coupled to the output node set OUT6 and the node NGa3. The nodes NGa3 and NGb3 are coupled to the input end of the output circuit OC3. The output end of the output circuit OC3 is coupled to the channel CH.

The input end and output end of the selection-and-adder circuit XFRa4 are respectively coupled to the output node set OUT7 and the node NGa3. The input end and output end of the selection-and-adder circuit XFRb4 are respectively coupled to the output node set OUT7 and the node NGa4. The input end and output end of the selection-and-adder circuit XFRc4 are respectively coupled to the output node set OUT8 and the node NGa4. The nodes NGa4 and NGb4 are coupled to the input end of the output circuit OC4. The output end of the output circuit OC4 is coupled to the channel CH4.

The input end and output end of the selection-and-adder circuit XFRa5 are respectively coupled to the output node set OUT9 and the node NGa4. The input end and output end of the selection-and-adder circuit XFRb5 are respectively coupled to the output node set OUT9 and the ground node GND.

Each of the transistors T1 to Tm of the selection-and-adder circuits XFRa1 to XFRa5 is controlled based on an output signal from an AND circuit set A1. More specifically, the AND circuit set A1 includes m AND circuits having output ends respectively coupled to the gate ends of the transistors T1 to Tm of the selection-and-adder circuit XFRa. Control signals CS1 to CSm are respectively input to the first input ends of the m AND circuits of the AND circuit set A1. A control signal GS is input to the second input end of each of the AND circuits of the m AND circuit set A1.

Each of the transistors T1 to Tm of the selection-and-adder circuits XFRb1 to XFRb5 is controlled based on an output signal from an AND circuit set A2. More specifically, the AND circuit set A2 includes m AND circuits having output ends respectively coupled to the gate ends of the transistors T1 to Tm of each selection-and-adder circuit XFRb. The control signals CS1 to CSm are respectively input to the first input ends of the m AND circuits of the AND circuit set A2. An inversion signal of the control signal GS is input to the second input end of each of the m AND circuits of the AND circuit set A2. The inversion signal of the control signal GS is generated by causing the control signal GS to be output via a logical NOT circuit NC.

Each of the transistors T1 to Tm of the selection-and-adder circuits XFRc1 to XFRc4 is controlled based on the control signal CS. More specifically, the control signals CS1 to CSm are respectively input to the gate ends of the transistors T1 to Tm of each selection-and-adder circuit XFRc as in the first arrangement.

As described above, the switch part 341b includes (N + 1) selection-and-adder circuits XFRa, (N + 1) selection-and-adder circuits XFRb, and N selection-and-adder circuits XFRc. In the switch part 341b, the input ends of the selection-and-adder circuits XFRak and XFRbk (k is an integer of two or more) are coupled to an output node set OUT(2×k-1). The output end of a selection-and-adder circuit XFRak is coupled to a node NGa(k-1). The output end of a selection-and-adder circuit XFRbk is coupled to a node NGbk. The input end of a selection-and-adder circuit XFRck is coupled to an output node set OUT(2×k). The output end of the selection-and-adder circuit XFRck is coupled to a node NGak. In the switch part 341b, the output end of the selection-and-adder circuit XFRa (selection-and-adder circuit XFRa1) assigned to one end portion and the output end of the selection-and-adder circuit XFRb (for example, the selection-and-adder circuit XFRb5) assigned to the other end portion are, for example, grounded.

The other configurations of the distance measuring device 1 according to the third arrangement are similar to those of the first arrangement.

### <3-2> Operation of Signal Processing Device 34b

In the third arrangement, the switch part 341b of the signal processing device 34b forms two types of combinations of the adjacent sub-channels SCH. In the third arrangement, these two types of combinations will be referred to as input groups IG1 and IG2. The following sequentially describes the operations of the signal processing device 34b (switch part 341b) at the first time and the second time respectively associated with the input groups IG1 and IG2 in the ranging operation of the distance measuring device 1.

### (First Time)

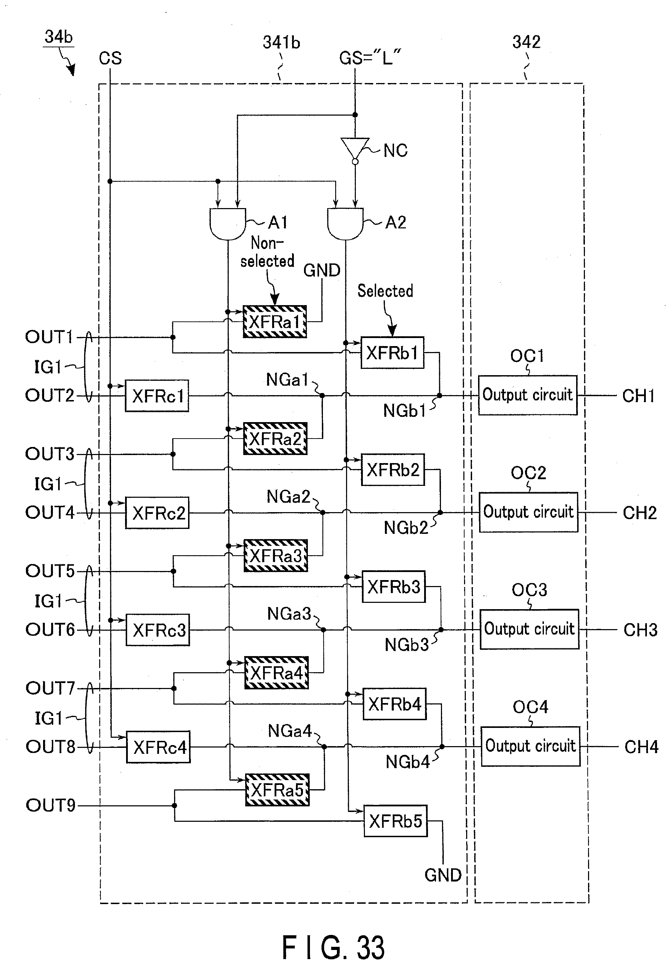

FIG. 33 depicts a schematic diagram showing an example of the operation of the signal processing device 34b at the first time in the ranging operation of the distance measuring device according to the third arrangement. FIG. 33 outlines the circuit configuration of the signal processing device 34b in the case of N = 4 and the control of the control circuit 35 at the first time. As shown in FIG. 33, the control circuit 35 according to the third arrangement sets the control signal GS to "L" level at the first time. In this case, each AND circuit of the AND circuit set A1 is set, based on the "L" level control signal GS, to a non-selected state in which an "L" level signal is output. On the other hand, based on the "H" level signal generated by inverting the control signal GS via the logical NOT circuit NC, each AND circuit of the AND circuit set A2 is set to a selected state in which an "H" level signal is output if the control signal CS is at "H" level, or an "L" level signal is output if the control signal CS is at "L" level.

More specifically, the output node set OUT1 is coupled to the node NGb1, and the output node set OUT2 is coupled to the node NGa1. The current obtained by adding output currents from the sub-channels SCH1 and SCH2 is input to the input end of the output circuit OC1. The output node set OUT3 is coupled to the node NGb2, and the output node set OUT4 is coupled to the node NGa2. The current obtained by adding output currents from the sub-channels SCH3 and SCH4 is input to the input end of the output circuit OC2. The output node set OUT5 is coupled to the node NGb3, and the output node set OUT6 is coupled to the node NGa3. The current obtained by adding output currents from the sub-channels SCH5 and SCH6 is input to the input end of the output circuit OC3. The output node set OUT7 is coupled to the node NGb4, and the output node set OUT8 is coupled to the node NGa4. The current obtained by adding output currents from the sub-channels SCH7 and SCH8 is input to the input end of the output circuit OC4.

Note that at the first time in the third arrangement, the selection-and-adder circuit XFRa1 couples between the output node set OUT1 and the ground node GND. Accordingly, the channel unit CHU1 corresponding to the output node set OUT1 is not used for the detection of light at the first time.

As described above, the signal processing device 34a according to the third arrangement inputs, to the output circuit OCk, the signal obtained by combining an output current from the output node set OUT(2×k-1) (1 ≤ k ≤ N) and an output current from the output node set OUT(2×k) in accordance with the input group IG1 at the first time. The output circuit OCk outputs a signal based on the signal obtained by adding the output current from the output node set OUT(2×k-1) and the output current from the output node set OUT(2×k) in accordance with the first time.

### (Second Time)

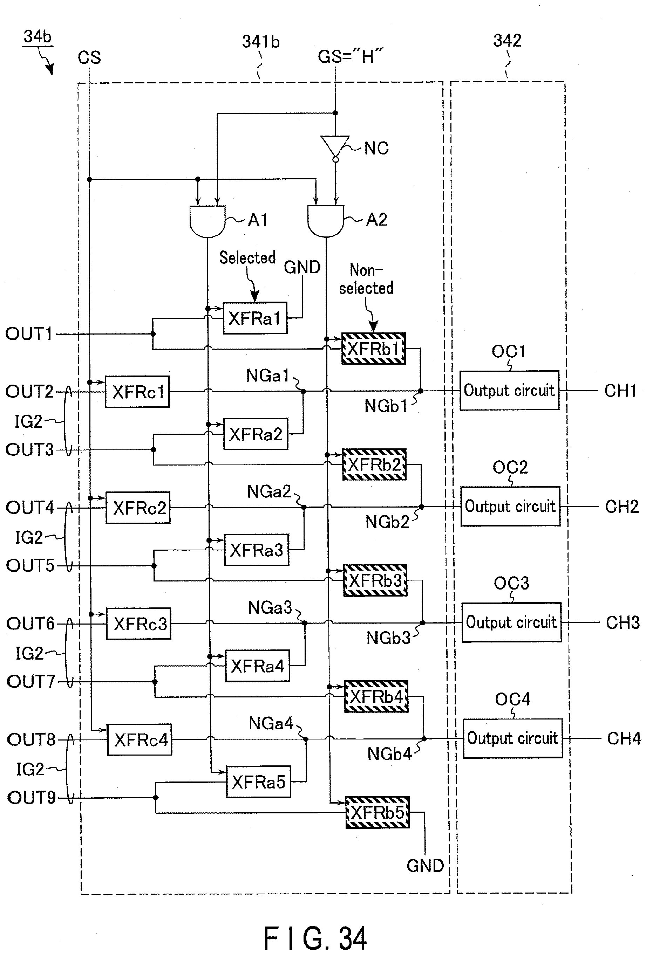

FIG. 34 depicts a schematic diagram showing an example of the operation of the signal processing device 34b at the second time in the ranging operation of the distance measuring device according to the third arrangement. FIG. 34 outlines the circuit configuration of the signal processing device 34b in the case of N = 4 and the control of the control circuit 35 at the second time. As shown in FIG. 34, the control circuit 35 according to the third arrangement sets the control signal GS to "H" level at the second time. In this case, each AND circuit of the AND circuit set A1 is set, based on the "H" level control signal GS, to a selected state in which an "H" level signal is output if the control signal CS is at "H" level or an "L" level signal is output if the control signal CS is at "L" level. On the other hand, based on the "L" level signal generated by inverting the control signal GS via the logical NOT circuit NC, each AND circuit of the AND circuit set A2 is set to a non-selected state in which an "L" level signal is output.

More specifically, the output node set OUT2 is coupled to the node NGa1, and the output node set OUT3 is coupled to the node NGa1. The current obtained by adding output currents from the sub-channels SCH1 and SCH2 is input to the input end of the output circuit OC1. The output node set OUT4 is coupled to the node NGa2, and the output node set OUT5 is coupled to the node NGa2. The current obtained by adding output currents from the sub-channels SCH4 and SCH5 is input to the input end of the output circuit OC2. The output node set OUT6 is coupled to the node NGa3, and the output node set OUT7 is coupled to the node NGa3. The current obtained by adding output currents from the sub-channels SCH5 and SCH6 is input to the input end of the output circuit OC3. The output node set OUT8 is coupled to the node NGa4, and the output node set OUT9 is coupled to the node NGa4. The current obtained by adding output currents from the sub-channels SCH8 and SCH9 is input to the input end of the output circuit OC4.

Note that at the second time in the third arrangement, the selection-and-adder circuit XFRa5 couples between the output node set OUT1 and the ground node GND. Accordingly, the channel unit CHU9 corresponding to the output node set OUT9 is not used for the detection of light at the second time.

As described above, the signal processing device 34a according to the third arrangement inputs, to the output circuit OCk, the signal obtained by combining an output current from the output node set OUT(2×k) (1 ≤ k ≤ N) and an output current from the output node set OUT(2×k+1) in accordance with the input group IG2 at the second time. The output circuit OCk outputs a signal based on the signal obtained by adding the output current from the output node set OUT(2×k) and the output current from the output node set OUT(2×k+1) in accordance with the first time.

The other operations of the distance measuring device 1 according to the third arrangement are similar to those of the first arrangement.

### <3-3> Advantageous Effect of Third Arrangement

The distance measuring device 1 according to the third arrangement has an advantageous effect similar to that of the first arrangement. The distance measuring device 1 according to the third arrangement can reduce the number of switches via which a signal output from the channel CH is transmitted by adding the functions of the column selector 33 and the switch part 341 than the first arrangement. As a result, the distance measuring device 1 according to the third arrangement can suppress a deterioration in the characteristic of a signal output to the channel CH and improve the ranging accuracy.

Note that although the third arrangement has exemplified the case in which the signal processing device 34 has the function of the column selector 33, the present invention is not limited to this. In the distance measuring device 1 according to the third arrangement, the column selector 33 may be regarded as having the function of the switch part 341 of the signal processing device 34.

### <4> Modification or Like

The distance measuring device according to the arrangement processes a plurality of intermittently input signals. The distance measuring device includes a plurality of input ends (SCH), first to Nth output ends (CH), and a control circuit. The plurality of input ends are configured such that a plurality of signals can be respectively input. The first to Nth output ends (N is an integer of two or more) are respectively associated with first to Nth groups each including M (M is an integer of two or more) consecutive input ends. The control circuit outputs the signal obtained by adding a plurality of signals respectively input to the M consecutive input ends of a kth groups (k is an integer of one or more and N or less) to the kth output end and switches combinations of input ends assigned as M input ends so as to set different combinations at the first time to the Mth time. When calculating a distance value at a measurement point of a target at the first time, the measurement section 40 uses measurement results at a plurality of measurement points included in the first range (AA1) including measurement points. When calculating a distance value at the measurement point of the target at the second time, the measurement section 40 uses at least measurement results at a plurality of measurement points included in the second range (AA2) shifted from the first range (AA1) by half of the pixel in the vertical direction. In addition, the measurement section 40 accumulates the measurement results at the plurality of measurement points included in the first range, detects at least one peak of a signal included in the accumulated measurement results, and decides a distance value at the measurement point of the target from at least one detected peak based on reliability information. The measurement section 40 transmit a first packet (P1) including the data of a plurality of distance values corresponding to the first time and a second packet (P2) including the data of a plurality of distance values corresponding to the second time to an image processing circuit (image processor 50). The image processing circuit then rearranges the data included in the first packet P1 and the data included in the second packet P2 such that the data output from the same output end (channel CH) are consecutively arranged. With this operation, the image processing circuit generates N × M pixels based on the data of the plurality of distance values corresponding to the first time to the Mth time.

Each arrangement described above can be variously modified. The first and second arrangements have respectively exemplified the cases where there are two and three types of combinations of sub-channels SCH in the input group IG. However, the present invention is not limited to this. For example, there may be four or more types of combinations of sub-channels SCH in the input group IG, and the signal processing device 34 may be configured to switch the four types of combinations of sub-channels SCH in the input group IG. The third arrangement has exemplified the case in which there are two types of combinations of output node sets OUT in the input group IG. However, the present invention is not limited to this. For example, there may be three or more types of combinations of output node sets OUT in the input group IG, and the signal processing device 34 may be configured to switch the three types of combinations of output node sets OUT in the input group IG.

The configuration described in the above arrangement may be rephrased as follows. In the distance measuring device 1 according to the above arrangement, the pixel PX is vertically divided into n' (n' is an integer of two or more), and n' consecutive outputs are added for every measurement. If, for example, the pixel PX is divided into two parts, an output from an even-numbered sub-channel SCH is switched and added with an output from an adjacent sub-channel SCH. In other words, the distance measuring device 1 is configured to alternately adde an output from the sub-channel SCH between the two consecutive even-numbered sub-channels SCH with an output from one of the two even-numbered sub-channels SCH and the other output. This makes it possible to design the distance measuring device 1 such that the number of channels CH coupling between the light detector PD and the measurement section 40 (measurement IC) is less than the number of sub-channels SCH and output the number of pixels in the vertical direction equal to the number of sub-channels SCH used for one measurement.

The above arrangement has exemplified the case in which a two-sided mirror is used as the mirror 25 to suppress the manufacturing cost. However, the present invention is not limited to this. If a higher importance is placed on the ranging accuracy than on the manufacturing cost, another type of mirror such as a polygon mirror may be used as the mirror 25.

The above arrangement has exemplified the case in which the signal processing device 34 includes the output part 342 (the output circuit OC, that is, the amplification circuit). However, the present invention is not limited to this. If the output of the sub-channel SCH is large (that is, the output current from the SPAD is large), the output part 342 may be omitted from the signal processing device 34. In other words, if there is no need to amplify the output of the sub-channel SCH, the amplification circuit may be omitted from the signal processing device 34.

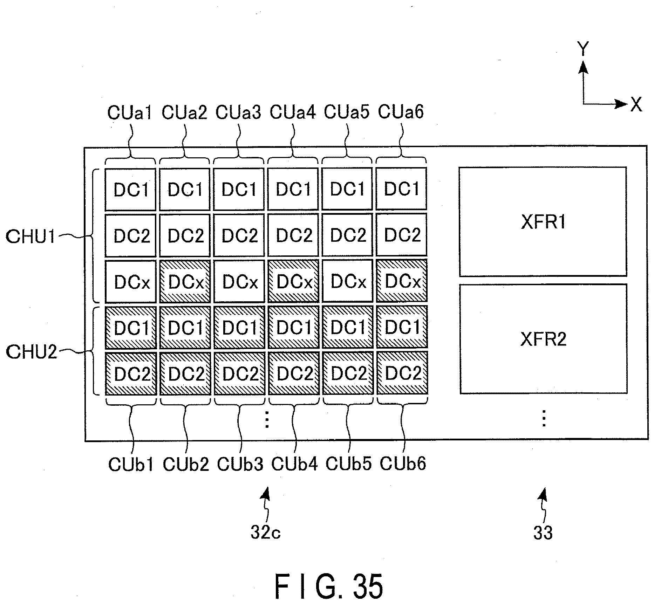

FIG. 35 is a schematic diagram showing an example of the plan layout of the sensor array 32c and the column selector 33 included in the light detector PD according to a modification. As shown in FIG. 35, each of the adjacent channel units CHU is not formed into a rectangular area depending on the number of light detection elements DC arrayed in the Y direction. In such a case, for example, the cell units CUa1 to CUa6 included in the channel unit CHU1 and the cell units CUb1 to CUb6 included in the channel unit CHU2 may have portions alternately arranged at the adjacent portions.

More specifically, the channel unit CHU1 includes a plurality of light detection elements DC arranged in the X direction and a plurality of light detection elements DC2 arranged in the X direction. The channel unit CHU2 includes the plurality of light detection elements DC1 arranged in the X direction and the plurality of light detection elements DC2 arranged in the X direction. The adjacent portion between the channel units CHU1 and CHU2 is provided with a plurality of light detection elements DCx arranged in the X direction. The odd-numbered light detection elements DCx along the X direction are included in the odd-numbered cell unit CUa. The even-numbered light detection elements DCx along the X direction are included in the even-numbered cell unit CUb.

In this manner, if the layout of the light detection elements DC is asymmetric at the adjacent channel units CHU, the light detection elements DCx in the boundary portion are preferably assigned to the adjacent channel units CHU such that the number of light detection elements DC assigned to one of the adjacent channel units CHU is almost equal to the number of light detection elements DC assigned to the other. The light detection elements DCx in the boundary portion need not be alternately assigned to the adjacent channel units CHU and can be freely designed. The layout of the sensor array 32c can be designed in a similar manner as in the case in which the signal processing device 34 is configured to switch combinations of three or more input groups IG.

The category of each configuration of the distance measuring device 1 may be other categories. The measurement section 40 may be other categories as long as it can realize the operations described in the above arrangements. The CPU included in the controller 10 may be other circuits. For example, in place of the CPU, a micro processing unit (MPU), etc. may be used. In addition, each of the processing described in each arrangement may be realized by dedicated hardware. Processing executed by software and processing executed by hardware may be mixed, or either one of them may exist. The controller 10 may be referred to as a control circuit. The measurement section 40 may be referred to as a measurement circuit. The image processor 50 may be referred to as an image processing circuit.

The logic level setting of each control signal used in the description of the operation may be other settings. Assume that the transistor T is a MOS (metal-oxide-semiconductor) having a p-type polarity. In this case, if an "H" level control signal is input to the gate end, the transistor T is turned on. Each of the switches SW, SWa, and SWb may operate in a similar manner as in the above arrangement based on a signal with a logic level inverse to the above arrangement.

In the present specification, the term "couple" refers to electrical coupling, and does not exclude, for example, intervention of another element. An "ON state" refers to a state in which the gate of a relevant transistor has a voltage equal to or greater than a threshold voltage of that transistor being applied. An "OFF state" refers to a state in which the gate of a relevant transistor has a voltage below a threshold voltage of that transistor being applied, and does not exclude, for example, a state in which a minute electric current such as a leakage current of the transistor flows. Each of "first end and the second end of a transistor" corresponds to the drain or source of the transistor. A "pixel PX" may be referred to as a sensor circuit. An "avalanche photodiode APD" may be referred to as a sensor. In the signal processing device 34, the sub-channel SCH may be referred to as an "input end", and the channel CH may be referred to as an "output end".

In the above arrangement, the operation of the signal processing device 34 at a plurality of times associated with the input groups IG may be rephrased as the operation of the signal processing device 34 at a plurality of settings associated with the input groups IG. That is, the operation at each time of the signal processing device 34 described in the above arrangement may be treated as a type of setting of the signal processing device 34. In this case, the signal processing device 34 is configured to operate, for example, based on information including a setting and a timing instructed from the outside of the photodetector PD (for example, the controller 10).

Clause 1. A signal processing device configured to process a plurality of intermittently input signals, the signal processing device comprising:
a plurality of input ends configured to input the plurality of signals, respectively;
first to Nth output ends respectively associated with first to Nth groups (N is an integer of not less than two), each of the first to Nth groups including M (M is an integer of not less than two) consecutive input ends; and
a control circuit configured to output, to the kth output end, a signal based on a signal obtained by adding a plurality of signals respectively input to the M consecutive input ends of the kth group (k an integer of not less than 1 and not more than N), the control circuit being configured to switch combinations of input ends as the M input ends to set different combinations at the first setting to the Mth setting.

Clause 2. The signal processing device of clause 1, wherein if M = 2,
the plurality of input ends include first to (N × 2 + 1)th inputs, and
the control circuit is configured to:
   output a signal based on a signal obtained by adding a plurality of signals respectively input to the (k × 2 -1)th input end and the (k × 2)th input end to the kth output end at the first setting; and
   output a signal based on a signal obtained by adding a plurality of signals respectively input to the (k × 2)th input end and the (k × 2 + 1)th input end to the kth output end at the second setting.

Clause 3. The signal processing device of clause 2, further comprising a first selection circuit and a second selection circuit, wherein
if M = 2,
the (k × 2)th input end is coupled to the kth output end,
the first selection circuit is configured to couple between the third input end and the second input end or between the third input end and the fourth input end, and
the second selection circuit is configured to couple between the fifth input end and the fourth input end or between the fifth input end and the sixth input end.

Clause 4. The signal processing device of clause 3, wherein if M = 2,
the control circuit is configured to:
couple between the third input end and the second input end by controlling the first selection circuit, and couple between the fifth input end and the fourth input end by controlling the second selection circuit at the first setting; and
couple between the third input end and the fourth input end by controlling the first selection circuit and couple between the fifth input end and the sixth input end by controlling the second selection circuit at the second setting.

Clause 5. The signal processing device of clause 1, wherein if M = 3,
the plurality of input ends include first to (N × 3 + 2)th input ends and
the control circuit is configured to:
   output, to the kth output end, a signal based on a signal obtained by adding a plurality of signals respectively input to the (k × 3 - 2)th input end, the (k × 3 - 1)th input end, and the (k × 3)th input end at the first setting;
   output, to the kth output end, a signal based on a signal obtained by adding a plurality of signals respectively input to the (k × 3 - 1)th input end, the (k × 3)th input end, and the (k × 3 + 1)th input end at the second setting; and
   output, to the kth output end, a signal based on a signal obtained by adding a plurality of signals respectively input to the (k × 3)th input end, the (k × 3 + 1)th input end, and the (k × 3 + 2)th input end at the third setting.

Clause 6. The signal processing device of clause 5, further comprising a first selection circuit to a fourth selection circuit, wherein if M =3,
the (k × 3)th input end is coupled to the kth output end,
the first selection circuit is configured to couple between the fourth input end and third input end or between the fourth input end and the sixth input end,
the second selection circuit is configured to couple between the fifth input end and third input end or between the fifth input end and the sixth input end,
the third selection circuit is configured to couple between the seventh input end and sixth input end or between the seventh input end and the ninth input end, and
the fourth selection circuit is configured to couple between the eighth input end and sixth input end or between the seventh input end and the ninth input end.

Clause 7. The signal processing device of clause 6, wherein if M = 3,
the control circuit is configured to:
couple between the fourth input end and the third input end by controlling the first selection circuit, couple between the fifth input end and the third input end by controlling the second selection circuit, couple between the seventh input end and the sixth input end by controlling the third selection circuit, and couple between the eight input end and the sixth input end by controlling the fourth selection circuit at the first setting;
couple between the fourth input end and the third input end by controlling the first selection circuit, couple between the fifth input end and the sixth input end by controlling the second selection circuit, couple between the seventh input end and the sixth input end by controlling the third selection circuit, and couple between the eight input end and the ninth input end by controlling the fourth selection circuit at the second setting; and
couple between the fourth input end and the sixth input end by controlling the first selection circuit, couple between the fifth input end the sixth input end by controlling the second selection circuit, couple between the seventh input end and the ninth input end by controlling the third selection circuit, and couple between the eighth input end and the ninth input end by controlling the fourth selection circuit at the third setting.

Clause 8. A light detector comprising:
the signal processing device defined in clause 1; and
a plurality of light detection elements respectively coupled to the plurality of input ends.

Clause 9. The light detector of clause 8, wherein each of the light detection elements include an avalanche photodiode.

Clause 10. The light detector of clause 9, wherein at each of the first setting to the Mth setting, a voltage higher than a voltage at an anode of the avalanche photodiode is applied to a cathode of the avalanche photodiode.

Clause 11. The light detector of clause 8, further comprising a column selector, wherein
the plurality of light detection elements respectively coupled to the plurality of input ends are classified into a plurality of cell units including at least one light detection element, and
the column selector is configured to selectively couple each of the plurality of input ends to at least one of the associated cell units.

Clause 12. The light detector of clause 11, wherein the column selector is configured to switch combinations of the input ends.

Clause 13. A distance measuring device comprising:
the light detector defined in clause 8;
a light source configured to emit a light signal; and
a measurement circuit configured to detect reflected light of the light signal based on a signal output from the light detector, the detection circuit being configured to calculate a distance value by using a time at which the light source emits the light signal and a time at which the reflected light is detected.

Clause 14. The distance measuring device of clause 13, further comprising an image processing circuit, wherein
the measurement circuit transmits, to the image processing circuit, a first packet including data of a plurality of distance values corresponding to the first time and a second packet including data of a plurality of distance values corresponding to the second time, and
the image processing circuit rearranges data included in the first packet and data included in the second packet so as to cause data output from the same output end to be consecutively arranged.

Clause 15. The distance measuring device of clause 13, wherein the image processing circuit generates N × M pixels based on data of a plurality of distance values corresponding to the first time to the Mth time.

Clause 16. The distance measuring device of clause 13, wherein the control circuit repeatedly executes processing at the first time to the Mth time and transmits, to the measurement circuit, information based on outputs from the first output end to the Nth output end at each of the first time to the Mth time for every processing at the Mth time.

Clause 17. The distance measuring device of clause 13, wherein
when calculating a distance value at a measurement point of a target at the first time, the measurement circuit is configured to use measurement results at a plurality of measurement points included in a first range including the measurement point; and
when calculating a distance value of a measurement point of a target at the second time, the measurement circuit is configured to use measurement results at a plurality of measurement points included in a second range shifted from the first range by at least half of a pixel in a vertical direction.

Clause 18. The distance measuring device of clause 17, wherein the measurement circuit is configured to:
accumulate measurement results at the plurality of measurement points included in the first range;
detect at least one peak of a signal included in the accumulated measurement results; and
decide a distance value at a measurement point of the target from at least one detected peak based on information of reliability.

Clause 19. The distance measuring device of clause 13, further comprising a revolving mirror having two reflecting surfaces, wherein
the revolving mirror is configured to:
reflect a light signal emitted from the light source to an outside; and
reflects the light signal reflected from an external target object to the light detector.

While certain arrangements have been described, these arrangements have been presented by way of example only, and are not intended to limit the scope of the inventions. Indeed, the novel arrangements described herein may be arrangement in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

## Claims

1. A signal processing device configured to process a plurality of intermittently input signals, the signal processing device comprising:
a plurality of input ends (SCH) configured to input the plurality of signals, respectively;
first to Nth output ends (CH) respectively associated with first to Nth groups (N is an integer of not less than two), each of the first to Nth groups including M (M is an integer of not less than two) consecutive input ends; and
a control circuit (10) configured to output, to the kth output end, a signal based on a signal obtained by adding a plurality of signals respectively input to the M consecutive input ends of the kth group (k an integer of not less than 1 and not more than N), the control circuit being configured to switch combinations of input ends as the M input ends to set different combinations at the first setting to the Mth setting.

2. The signal processing device of claim 1, wherein if M = 2,
the plurality of input ends include first to (N × 2 + 1)th inputs, and
the control circuit is configured to:
output a signal based on a signal obtained by adding a plurality of signals respectively input to the (k × 2 -1)th input end and the (k × 2)th input end to the kth output end at the first setting; and
output a signal based on a signal obtained by adding a plurality of signals respectively input to the (k × 2)th input end and the (k × 2 + 1)th input end to the kth output end at the second setting.

3. The signal processing device of claim 2, further comprising a first selection circuit (SW2) and a second selection circuit (SW3), wherein
if M = 2,
the (k × 2)th input end is coupled to the kth output end,
the first selection circuit is configured to couple between the third input end (SCH3) and the second input end (SCH2) or between the third input end and the fourth input end (SCH4), and
the second selection circuit is configured to couple between the fifth input end (SCH5) and the fourth input end or between the fifth input end and the sixth input end (SCH6).

4. The signal processing device of claim 3, wherein if M = 2,
the control circuit is configured to:
couple between the third input end and the second input end by controlling the first selection circuit, and couple between the fifth input end and the fourth input end by controlling the second selection circuit at the first setting; and
couple between the third input end and the fourth input end by controlling the first selection circuit and couple between the fifth input end and the sixth input end by controlling the second selection circuit at the second setting.

5. The signal processing device of claim 1, wherein if M = 3,
the plurality of input ends include first to (N × 3 + 2)th input ends and
the control circuit is configured to:
output, to the kth output end, a signal based on a signal obtained by adding a plurality of signals respectively input to the (k × 3 - 2)th input end, the (k × 3 - 1)th input end, and the (k × 3)th input end at the first setting;
output, to the kth output end, a signal based on a signal obtained by adding a plurality of signals respectively input to the (k × 3 - 1)th input end, the (k × 3)th input end, and the (k × 3 + 1)th input end at the second setting; and
output, to the kth output end, a signal based on a signal obtained by adding a plurality of signals respectively input to the (k × 3)th input end, the (k × 3 + 1)th input end, and the (k × 3 + 2)th input end at the third setting.

6. The signal processing device of claim 5, further comprising a first selection circuit to a fourth selection circuit, wherein if M =3,
the (k × 3)th input end is coupled to the kth output end,
the first selection circuit (SWa2) is configured to couple between the fourth input end (SCH4) and third input end (SCH3) or between the fourth input end and the sixth input end (SCH6),
the second selection circuit (SWb2) is configured to couple between the fifth input end (SCH5) and third input end or between the fifth input end and the sixth input end,
the third selection circuit (SWa3) is configured to couple between the seventh input end (SCH7) and sixth input end or between the seventh input end and the ninth input end (SCH9), and
the fourth selection circuit (SWb3) is configured to couple between the eighth input end (SCH8) and sixth input end or between the seventh input end and the ninth input end.

7. The signal processing device of claim 6, wherein if M = 3,
the control circuit is configured to:
couple between the fourth input end and the third input end by controlling the first selection circuit, couple between the fifth input end and the third input end by controlling the second selection circuit, couple between the seventh input end and the sixth input end by controlling the third selection circuit, and couple between the eight input end and the sixth input end by controlling the fourth selection circuit at the first setting;
couple between the fourth input end and the third input end by controlling the first selection circuit, couple between the fifth input end and the sixth input end by controlling the second selection circuit, couple between the seventh input end and the sixth input end by controlling the third selection circuit, and couple between the eight input end and the ninth input end by controlling the fourth selection circuit at the second setting; and
couple between the fourth input end and the sixth input end by controlling the first selection circuit, couple between the fifth input end the sixth input end by controlling the second selection circuit, couple between the seventh input end and the ninth input end by controlling the third selection circuit, and couple between the eighth input end and the ninth input end by controlling the fourth selection circuit at the third setting.

8. A light detector comprising:
the signal processing device defined in claim 1; and
a plurality of light detection elements (DC) respectively coupled to the plurality of input ends.

9. The light detector of claim 8, wherein each of the light detection elements include an avalanche photodiode (APD).

10. The light detector of claim 9, wherein at each of the first setting to the Mth setting, a voltage higher than a voltage at an anode of the avalanche photodiode is applied to a cathode of the avalanche photodiode.

11. The light detector of claim 8, further comprising a column selector (33), wherein
the plurality of light detection elements respectively coupled to the plurality of input ends are classified into a plurality of cell units (CU) including at least one light detection element, and
the column selector is configured to selectively couple each of the plurality of input ends to at least one of the associated cell units.

12. The light detector of claim 11, wherein the column selector is configured to switch combinations of the input ends.

13. A distance measuring device comprising:
the light detector defined in claim 8;
a light source (23) configured to emit a light signal; and
a measurement circuit (40) configured to detect reflected light of the light signal based on a signal output from the light detector, the detection circuit being configured to calculate a distance value by using a time at which the light source emits the light signal and a time at which the reflected light is detected.

14. The distance measuring device of claim 13, further comprising an image processing circuit (50), wherein
the measurement circuit transmits, to the image processing circuit, a first packet including data of a plurality of distance values corresponding to the first time and a second packet including data of a plurality of distance values corresponding to the second time, and
the image processing circuit rearranges data included in the first packet and data included in the second packet so as to cause data output from the same output end to be consecutively arranged.

15. The distance measuring device of claim 13, wherein the image processing circuit generates N × M pixels based on data of a plurality of distance values corresponding to the first time to the Mth time.
